(19)

**Europäisches Patentamt**
**European Patent Office**
**Office européen des brevets**

(11)  **EP 2 977 810 A1**

(12)  # EUROPÄISCHE PATENTANMELDUNG

(43) Veröffentlichungstag:
**27.01.2016   Patentblatt 2016/04**

(51) Int Cl.:
**G02B 21/16** *(2006.01)*      **G01N 21/64** *(2006.01)*
**G02B 21/06** *(2006.01)*      **G02B 27/56** *(2006.01)*

(21) Anmeldenummer: **15177958.4**

(22) Anmeldetag: **22.07.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **22.07.2014   LU 92505**

(71) Anmelder: **Leica Microsystems CMS GmbH**
**35578 Wetzlar (DE)**

(72) Erfinder:
• KNEBEL, Dr., Werner
  **76709 Kronau (DE)**
• FAHRBACH, Dr., Florian
  **69115 Heidelberg (DE)**

(74) Vertreter: **Bradl, Joachim**
**Leica Microsystems GmbH Corporate Patents**
**+ Trademarks Department**
**Ernst-Leitz-Strasse 17-37**
**35578 Wetzlar (DE)**

(54)  **VERFAHREN UND VORRICHTUNG ZUM MIKROSKOPISCHEN UNTERSUCHEN EINER PROBE**

(57)   Die Erfindung betrifft ein Verfahren und eine Vorrichtung zum mikroskopischen Untersuchen einer Probe. Das Verfahren beinhaltet den Schritt des Positionierens einer Probe räumlich zwischen einem Beleuchtungsobjektiv und einem Detektionsobjektiv, wobei die Probe mit einem optisch transparenten Medium in Kontakt steht, das einen höheren Brechungsindex aufweist als die Probe. Das Verfahren beinhaltet außerdem die Schritte des Erzeugens eines Beleuchtungslichtbündels, des Lenkens des Beleuchtungslichtbündels durch das Beleuchtungsobjektiv, das das Beleuchtungslichtbündel fokussiert, des Umlenkens des Beleuchtungslichtbündels, das das Beleuchtungsobjektiv durchlaufen hat, mit einem Umlenkmittel derart, dass das Beleuchtungslichtbündel auf eine Grenzfläche zwischen dem optisch transparenten Medium und der Probe trifft und dort zur evaneszenten Beleuchtung der Probe totalreflektiert wird, und des Detektierens des von der Probe ausgehenden und durch das Detektionsobjektiv verlaufenden Fluoreszenzlichtes.

Fig. 1

EP 2 977 810 A1

**Beschreibung**

Die Erfindung betrifft ein Verfahren zum mikroskopischen Untersuchen einer Probe.

Die Erfindung betrifft außerdem eine Vorrichtung zur Ausführung eines solchen Verfahrens.

Bei mikroskopischen Fluoreszenz-Untersuchungen von Proben werden diese zumeist direkt mit einem Beleuchtungslichtbündel beleuchtet, um die Probe im beleuchteten Bereich optisch anzuregen und anschließend das von der Probe ausgehende Fluoreszenzlicht zu detektieren. In der Rastermikroskopie wird der Fokus eines Beleuchtungslichtbündels zumeist mit Hilfe einer steuerbaren Strahlablenkeinrichtung, die beispielsweise einen oder mehrere Kippspiegel beinhalten kann, mäanderförmig über oder durch die Probe geführt und die Probe so Probenpunkt für Probenpunkt abgerastert.

Alternativ zu einer direkten Probenbeleuchtung ist es auch möglich, die Probe evaneszent zu beleuchten. Hierbei wird das Anregungslicht an einer Grenzfläche zur Probe totalreflektiert, wobei die Anregung der Probe durch das mit der Eindringtiefe abklingende evaneszente elektromagnetische Feld erfolgt. Für diese Art der Probenuntersuchung hat sich der Begriff TIRFM (total internal reflection fluorescence microscopy) eingebürgert.

Aus DE 103 44 410 A1 ist ein Rastermikroskop mit evaneszenter Probenbeleuchtung bekannt. Das Rastermikroskop beinhaltet eine Lichtquelle, deren Licht in ein Deckglas eingekoppelt wird, so dass es sich in diesem durch totalinterne Reflexion flächig ausbreiten und eine auf dem Deckglas angeordnete Probe großflächig evaneszent beleuchten kann. Außerdem weist das Rastermikroskop einen Punktdetektor auf, der von einem Rasterpunkt der Probe ausgehendes Detektionslicht empfängt, und eine im Strahlengang des Detektionslichtes angeordnete Strahlablenkeinrichtung zum Verschieben der Position des Rasterpunktes in der Probe. Allerdings hat diese Vorrichtung den Nachteil, dass die Einkopplung des Beleuchtungslichts in das Deckglas nicht sehr effizient ist und daher nur eine verringerte Lichtmenge zur evaneszenten Probenbeleuchtung zur Verfügung steht.

Aus DE 10 2006 039 976 A1 ist eine Beleuchtungsoptik für ein optisches Gerät zur Beobachtung einer Probe, insbesondere zur TIRF-Mikroskopie bekannt. Die Probe wird auf der der Beleuchtungsoptik abgewandten Seite eines Trägerglases positioniert. Das aus der Beleuchtungsoptik austretende Beleuchtungslicht ist zu einem Beleuchtungsstrahlenbündel geformt, das mit der Normalen auf die Oberfläche des Trägerglases einen Winkel ungleich 90° einschließt. Die Beleuchtungsoptik weist mindestens zwei optisch wirksame Elemente auf, welche die Form und Richtung des Beleuchtungsstrahlenbündels beeinflussen, und die außerhalb eines Detektionsstrahlenganges angeordnet sind, welcher das von der Probe kommende Licht einem Detektor zuführt. Bevorzugt sind die optisch wirksamen Elemente als ringförmige Linsen ausgebildet und konzentrisch um den Detektionsstrahlengang angeordnet.

Aus DE 10 2005 040 833 A1 ist eine optische Anordnung zur mikroskopischen Beobachtung einer Probe bekannt, bei der das Beleuchtungslicht in Strahlengängen außerhalb des Mikroskopobjektivs geführt ist, wobei im Beleuchtungslicht ein Beugungsgitter angeordnet ist, so dass aufgrund der damit erzielten Beugung mindestens ein Anteil des Beleuchtungslichtes unter einem Winkel auf die Grenzfläche gerichtet ist, der zur Totalreflexion an der Grenzfläche führt.

TIRF-Mikroskopie erfordert ganz allgemein die Beleuchtung der Probe unter einem Winkel, der groß genug ist, dass an der Grenzfläche zwischen einem Substrat auf dem die Probe aufgebracht ist und der Probe Totalreflexion auftritt. Bei den oben genannten - objektivbasierten - TIRF-Mikroskopen, bei denen das Beleuchtungslicht unmittelbar von dem Beleuchtungsobjektiv zur Grenzschicht gelangt, muss die numerische Apertur (NA) des Beleuchtungsobjektivs betragsmäßig größer sein als der Brechungsindex der Probe, um die für die Totalreflexion notwendigen hohen Winkel zu erreichen. Dies folgt unmittelbar aus dem Snelliussches Brechungsgesetz: $n_1 \sin\alpha_1 = n_2 \sin\alpha_2$ und $\alpha_2 = 90° \rightarrow n_1 \sin\alpha_1 = NA_1 = n_2$. Die Beleuchtung erfolgt dabei üblicherweise im äußeren Ringbereich der Pupille des Objektivs. Beispielsweise bei einem üblichen Glassubstrat ($n_1 = 1.52$) und Zellen mit einem Brechungsindex ähnlich dem von Wasser ($n_2 = 1.33$) liegt der kritische Winkel (kleinster möglicher Winkel für Totalreflexion) bei 61°. Daher ist ein Beleuchtungsobjektiv mit einer numerischen Apertur NA größer als 1.33 notwendig. Objektive mit so hohen Aperturen sind extrem teuer, da sie sehr schwer herzustellen sind und nur speziell für TIRF-Mikroskopie nutzbar sind. Sie weisen darüber hinaus bedingt durch die hohen optischen Anforderungen sehr kleine freie Arbeitsabstände auf.

Aus Axelrod, D: "Total Internal Reflection Fluorescence Microscopy in Cell Biology", 2: 764-774 (2001) sind einige Alternativen zu einem objektivbasierten TIRF-Mikroskop bekannt, die jedoch im Aufbau sehr kompliziert sind, nur umständlich zu handhaben sind und die mit handelsüblichen Mikroskopen, insbesondere auf Grund der bei diesen vorliegenden Raumverhältnisse, gar nicht oder allenfalls nur sehr aufwändig realisierbar sind.

Aus DE 199 23 563 C2 ist eine Vorrichtung zur tiefenauflösenden Totalreflexionsfluorometrie mikroskopischer Proben bekannt. Bei diesen Vorrichtungen wird ein vorgegebener Probenbereich unter variablem Winkel beleuchtet. Das bei der Totalreflexion austretende evaneszente elektromagnetische Feld dringt dabei in unterschiedliche Tiefen der Probe ein und kann dort Moleküle zur Fluoreszenz anregen. Die Vorrichtung stellt eine kompakte Beleuchtungseinheit dar, bei der ein Lichtpunkt auf einem winkeldispersiven Element über ein hemisphärisches oder hemizylindrisches Prisma auf die Probe abgebildet wird. In die Beleuchtungseinheit kann Licht beliebiger Lichtquellen vom nahen ultravioletten bis zum nahen infraroten Spektralbereich über Multimode- oder Monomodefasern eingekoppelt werden.

Die Verwendung von Scannern bei der TIRF-Mikroskopie ist beispielsweise aus Van 't Hoff, M., de Sars, V. & Oheim, M.: "A programmable light engine for quantitative single molecule TIRF and HILO imaging"; Opt. Express 16, 18495-18504 (2008), bekannt. Diese Druckschrift offenbart ein objektivbasiertes TIRF-Gerät, bei dem der Winkel des Beleuchtungslichtbündels und dessen Richtung mittels akkusto-optischer Modulatoren mit hoher Geschwindigkeit eingestellt werden kann. Auch aus Sailer, R., Stock, K., Strauss, W. S. L., Lyttek, M. & Schneckenburger, H.,: "Total internal reflection fluorescence microscopy (TIRFM) of acridine orange in single cells"; Endocytobiosis & Cell Research 14, 129-136 (2001), ist ein Gerät bekannt, in dem ein Scanner verwendet wird, um den Winkel unter dem der Strahl auf die Grenzfläche trifft zu variieren.

Die aus dem Stand der Technik bekannten Verfahren und Vorrichtungen haben hinsichtlich der evaneszenten Probenbeleuchtung oftmals den Nachteil, dass der genaue Ort der Probenbeleuchtung nicht flexibel und hinreichend präzise eingestellt werden kann. Darüber hinaus haben die meisten der aus dem Stand der Technik bekannten Verfahren und Vorrichtungen den Nachteil, dass nur umständlich oder gar keine Beleuchtung aus unterschiedlichen Richtungen möglich ist. Grundsätzlich ist bei objektiv-basierten Systemen der Bereich in dem Fluoreszenz durch totalinterne Reflexion (TIR) angeregt werden kann auf das typischerweise kleine Bildfeld des hochaperturigen Objektivs beschränkt. Wird das Feld durch andere, separate Optiken erzeugt, entfällt diese Einschränkung, aber die Beleuchtung aus verschiedenen Richtungen ist typischerweise deutlich erschwert.

Darüber hinaus haben die aus dem Stand der Technik bekannten Verfahren und Vorrichtungen den Nachteil, dass die Proben vor einer mikroskopischen Untersuchung bei evaneszenter Beleuchtung aufwendig in speziellen Probenkammern oder zwischen Deckgläsern angeordnet und präpariert werden müssen, bevor die Probenkammer oder die Anordnungen von Deckgläsern, zwischen denen die Probe mechanisch eingeklemmt ist, auf den Objekttisch eines Mikroskops gelegt werden kann. Oftmals werden gerade die Randbereiche der Probe, die an der Grenzfläche anliegen, an der die Totalreflektion stattfinden soll, durch die andauernde Druckbelastung geschädigt, so dass das die nachfolgende mikroskopische Untersuchung zumindest negativ beeinflusst oder sogar ganz unmöglich gemacht wird.

Es ist die Aufgabe der vorliegenden Erfindung, ein Verfahren zum mikroskopischen Untersuchen einer Probe anzugeben, das flexibel für unterschiedliche Proben und Anordnungen von Proben einsetzbar und insbesondere probenschonend ausführbar ist.

Die Aufgabe wird durch ein Verfahren gelöst, das die folgenden Schritte beinhaltet:

a. In-Kontakt-bringen der Probe mit einem optisch transparenten Medium, das einen höheren Brechungsindex aufweist als die Probe,

b. Positionieren einer Probe räumlich zwischen einem Beleuchtungsobjektiv und einem Detektionsobjektiv,

c. Erzeugen eines Beleuchtungslichtbündels,

d. Lenken des Beleuchtungslichtbündels durch das Beleuchtungsobjektiv, das das Beleuchtungslichtbündel fokussiert,

e. Umlenken des Beleuchtungslichtbündels, das das Beleuchtungsobjektiv durchlaufen hat, in Richtung auf die zu untersuchende Probe mit einem Umlenkmittel, derart dass das Beleuchtungslichtbündel auf eine Grenzfläche zwischen dem optisch transparenten Medium und der Probe trifft und dort zur evaneszenten Beleuchtung der Probe totalreflektiert wird,

f. Detektieren des von der Probe ausgehenden und durch das Detektionsobjektiv verlaufenden Fluoreszenzlichtes. Beispielsweise mit einem Detektor, der ein zur Lichtleistung des Fluoreszenzlichts proportionales elektrisches Signal erzeugt.

Es ist eine weitere Aufgabe der vorliegenden Erfindung, eine Vorrichtung anzugeben, die es ermöglicht, eine mikroskopische Probe nach dem oben genannten Verfahren bei evaneszenter Beleuchtung abzubilden.

Diese Aufgabe wird durch eine Vorrichtung gelöst, die ein Beleuchtungsobjektiv und ein Detektionsobjektiv, an dem ein Umlenkmittel zum Umlenken eines Beleuchtungslichtbündels auf eine Grenzfläche zwischen einem optisch transparenten Medium und einer Probe angeordnet ist, aufweist.

Insbesondere wird diese Aufgabe durch eine Vorrichtung gelöst, die folgendes aufweist:

a. ein Beleuchtungsobjektiv und ein Detektionsobjektiv, zwischen denen eine zu untersuchende Probe, die mit einem optisch transparenten Medium in Kontakt steht, das einen höheren Brechungsindex aufweist als die Probe, positionierbar ist,

b. einer Lichtquelle, die ein Beleuchtungslichtbündel erzeugt, das das Beleuchtungsobjektiv fokussiert,

c. ein Umlenkmittel, das das Beleuchtungslichtbündel, nach dem es das Beleuchtungsobjektiv durchlaufen hat, derart umlenkt, dass das Beleuchtungslichtbündel auf eine Grenzfläche zwischen dem optisch transparenten Medium und der Probe trifft und dort zur evaneszenten Beleuchtung der Probe totalreflektiert wird,

d. einen Detektor zum Detektieren des von der Probe (5) ausgehenden und durch das Detektionsobjektiv (2) verlaufenden Fluoreszenzlichtes.

Die Erfindung hat insbesondere den ganz besonderen Vorteil, dass eine flexibel an die jeweiligen Anforderungen der Probe und der Experimentierparameter anpassbare Untersuchungsmöglichkeit bei evaneszenter Probenbeleuchtung gegeben ist, ohne dass ein aufwändiges und hochaperturiges Beleuchtungsobjektiv verwendet werden muss. Im Gegenteil kommt die vorliegende Erfindung mit niederaperturigen Beleuchtungsobjektiven aus, die eine numerische Apertur von weniger als 0,1 aufweisen können.

Außerdem hat die vorliegende Erfindung den besonderen Vorteil, dass sie unter Verwendung eines handelsüblichen Mikroskopaufbaus und/oder unter Verwendung eines handelsüblichen Mikroskopstativs realisierbar ist.

Die Erfindung hat den Vorteil, dass eine evaneszente Probenbeleuchtung mit besonders großer Effizienz ermöglicht ist. Dies ist insbesondere darauf zurückzuführen, dass das Beleuchtungslichtbündel aufgrund der Umlenkung mit dem Umlenkmittel, die nach dem Durchlaufen des Beleuchtungsobjektivs erfolgt, einfach und zuverlässig unter dem erforderlichen Einfallswinkel zum Bewirken einer totalinternen Reflektion auf die Grenzfläche zwischen dem optisch transparenten Medium und der Probe gelenkt werden kann.

Darüber hinaus hat die Erfindung den weiteren, besonderen Vorteil, dass der Auftreffort auf die Grenzfläche zwischen dem optisch transparenten Medium und der Probe einfach und ohne die Gefahr geändert werden kann, dass der Grenzwinkel der Totalreflektion ungewollt durchschritten wird, was weiter unten noch im Detail erläutert ist.

Typischerweise wird TIRF mit hochaperturigen Objektiven durchgeführt. Durch die großen Winkel ist die Korrektur von optischen Fehlern, insbesondere durch Dispersion bedingte kompliziert und teuer. Gemäß der Erfindung können die kritischen Winkel ohne komplexe, teure Optiken erreicht werden und Dispersionseffekte bei der Brechung an Sprüngen des Brechungsindex können stark minimiert oder sogar ganz vermieden werden. Daher eignet sich die Erfindung besonders gut für TIRF über ein breites Spektrum von Anregungswellenlängen.

Das erfindungsgemäße Verfahren kann darüber hinaus vorteilhaft auch in der Weise ausgeführt werden kann, dass eine Probe vollkommen ohne Druckbelastung der zur untersuchenden Randfläche in eine Untersuchungsposition verbracht werden kann und allenfalls erst unmittelbar vor dem Erzeugen einer mikroskopischen Abbildung mit dem optisch transparenten Medium in Kontakt gebracht wird, so dass die mikroskopische Untersuchung einer weitgehend unbelasteten Probe ermöglicht ist. Auch dies ist weiter unten insbesondere im Zusammenhang mit einigen Ausführungsbeispielen genauer erläutert. Die Erfindung hat außerdem den ganz besonderen Vorteil, dass die Probe - vollkommen ohne zusätzliche Druckbelastung - alternativ einfach in einer Schale, die wie eine Petrischale ausgebildet sein kann, untersucht werden kann.

Als optisch transparentes Medium, welches einen höheren Brechungsindex aufweist als die Probe, wird im Rahmen dieser Anmeldung insbesondere ein durchsichtiger Festkörper, insbesondere ein glattes Substrat, mit einer ebenen Grenzfläche verstanden, mit dem die zu untersuchende Probe in unmittelbarem Kontakt steht, so dass die an der Grenzfläche zwischen dem Festkörper und der Probe auftretenden evaneszenten Felder in der Probe Fluoreszenz anregen können. Die Probe kann dabei von einem weiteren, optisch transparenten, insbesondere flüssigen Immersionsmedium umgeben sein, welches möglichst, aber nicht notwendigerweise, einen geringeren Brechungsindex aufweist als die Probe. Der Festkörper kann auch in unterschiedlichen räumlichen Abschnitten jeweils eine ebene Grenzfläche aufweisen, wobei die Grenzflächen nicht notwendigerweise parallel ausgerichtet sein müssen oder unmittelbar aneinander grenzen müssen.

Wie weiter unten noch im Detail erläutert wird, kann die Erfindung in der Weise ausgeführt werden, dass das Beleuchtungslichtbündel auf die dem Detektionsobjektiv zugewandte Seite der Grenzfläche trifft. Es ist in besonders vorteilhafter Weise, was ebenfalls weiter unten im Detail erläutert wird, auch möglich, dass das Beleuchtungslichtbündel auf die dem Beleuchtungsobjektiv zugewandte Seite der Grenzfläche trifft. Insbesondere eine solche Ausführung ermöglicht einen sehr guten Zugang zur Probe während einer Untersuchung, so dass beispielsweise Pipetten, Patch-clamps, Mikroinjektionsnadeln an die Probe herangeführt werden können.

Um das Beleuchtungslichtbündel mit dem für eine totalinterne Reflektion erforderlichen Einfallswinkel auf die Grenzfläche zwischen der Probe und dem optisch transparenten Medium zuverlässig ausrichten zu können, wird die Grenzfläche vorzugsweise in einem von Null Grad verschiedenen Winkel zur optischen Achse des Beleuchtungsobjektivs und/oder des Detektionsobjektivs ausgerichtet. Besonders flexibel und vielseitig einsetzbar ist eine Ausführung, bei der die Grenzfläche zwischen der Probe und dem optisch transparenten Medium senkrecht zur optischen Achse des Beleuchtungsobjektivs und/oder des Detektionsobjektivs ausgerichtet ist. Insbesondere eine solche Ausrichtung erlaubt es, die Probe und insbesondere ein und denselben Probenbereich der Probe aus unterschiedlichen Richtungen und insbesondere jeweils mit demselben Einfallswinkel zu beleuchten. Dies erfolgt beispielsweise, um die Fluoreszenzeigenschaften der Probe in Abhängigkeit von der Polarisation des Beleuchtungslichts, insbesondere in Abhängigkeit von der Ausrichtung der Ebene der Linearpolarisation des Beleuchtungslichts, zu untersuchen.

Insbesondere hierfür kann vorteilhaft vorgesehen sein, dass das Beleuchtungslichtbündel nach dem Umlenken in einer Ebene verläuft, die einen von Null Grad verschieden Winkel zur optischen Achse des Beleuchtungsobjektivs aufweist. Beispielsweise kann vorgesehen sein, dass das Beleuchtungslichtbündel derart abgelenkt wird, dass es unter einem Einfallswinkel im Bereich von 55 bis 70 Grad, insbesondere im Bereich von 60 bis 64 Grad, auf die Grenzfläche zwischen der Probe und dem optisch transparenten Medium trifft. Innerhalb dieser Bereiche ist eine evaneszente Probenbeleuchtung der meisten biologischen Proben bei ausreichender Eindringtiefe möglich.

Bei einer besonderen Ausführung ist das Umlenkmittel oder wenigstens eines von mehreren Umlenkelementen des Umlenkmittels an dem Detektionsobjektiv oder Beleuchtungsobjektiv angeordnet und/oder befestigt. Eine solche Ausführung hat den Vorteil, dass weitgehend kein zusätzliches Stativmaterial erforderlich ist, das die Zugänglichkeit zur Probe einschränken würde.

Insbesondere kann vorteilhaft vorgesehen sein, dass das optisch transparente Medium als Probenträger oder als Boden eines als Schale ausgebildeten Probenträgers ausgebildet ist. Beispielsweise kann die Probe in einem als Schale ausgebildeten Probenträger angeordnet werden, der für die Untersuchung in einer Untersuchungsposition auf einem Umlenkelement des Umlenkmittels abgestellt wird. Insbesondere kann, was weiter unten noch im Detail beschrieben ist, der Probenträger in der Untersuchungsposition auf einem Austrittsfenster eines Umlenkelements des Umlenkmittels abgestellt sein.

Insbesondere hierbei kann vorteilhaft vorgesehen sein, dass das optisch transparente Medium unmittelbar mit dem Umlenkmittel oder einem Umlenkelement des Umlenkmittels in Kontakt steht. Es ist auch möglich, dass das optisch transparente Medium über eine Immersionsschicht, insbesondere bestehend aus einer Immersionsflüssigkeit, mit dem Umlenkmittel oder einem Umlenkelement des Umlenkmittels in Kontakt steht. Auf diese Weise wird ein Versatz des Beleuchtungslichtbündels beim Übergang von dem Umlenkmittel zu dem transparenten Medium vermieden. Insbesondere kann das transparente optische Medium das Umlenkmittel sein oder Teil des Umlenkmittels sein.

Bei einer besonders vorteilhaften Ausführung wird das Beleuchtungslichtbündel mit dem Umlenkmittel derart umgelenkt, dass das umgelenkte Beleuchtungslichtbündel auf die dem Beleuchtungsobjektiv zugewandte Seite der Grenzfläche trifft. Eine solche Ausführung erlaubt es insbesondere, die Probe in einer Schale anzuordnen und evaneszent von unten zu beleuchten, während die Probe von oben weitgehend frei zugänglich ist. Insbesondere ist so vermieden, die Probe zwischen Objektträgern einzuspannen und so einer möglicherweise probenschädigenden Druckbelastung auszusetzen.

Insbesondere um zu erreichen, dass das umgelenkte Beleuchtungslichtbündel auf die dem Beleuchtungsobjektiv zugewandte Seite der Grenzfläche trifft, kann das Umlenken mehrere Einzelumlenkungen beinhalten. Insbesondere kann das Umlenken mehrere aufeinanderfolgende Einzelumlenkungen mit Ablenkwinkeln unterschiedlicher Vorzeichen beinhalten. Beispielsweise kann das aus dem Beleuchtungsobjektiv austretende Beleuchtungslichtbündel, das insbesondere parallel zur optischen Achse des Beleuchtungsobjektivs verlaufen kann, zunächst mittels eines ersten Umlenkelements des Umlenkmittels zur optischen Achse des Beleuchtungsobjektivs hin umgelenkt werden und anschließend mittels eines zweiten Umlenkelements zur Grenzfläche umgelenkt werden.

Wie bereits erwähnt kann das Umlenkmittel wenigstens ein erstes Umlenkelement und ein zweites Umlenkelement aufweisen. Hierbei vorteilhaft vorgesehen sein, dass das erste Umlenkelement und das zweite Umlenkelement das Beleuchtungslichtbündel nacheinander, insbesondere mit Ablenkwinkeln unterschiedlichen Vorzeichens und/oder unterschiedlicher Beträge, umlenken. Ein für eine Totalreflexion erforderlicher Einfallswinkel des Beleuchtungslichtbündels auf die Grenzfläche kann insbesondere dadurch erreicht werden, dass das erste Umlenkelement das Beleuchtungslichtbündel mit einem ersten Umlenkwinkel umlenkt und das zweite Umlenkelement das Beleuchtungslichtbündel mit einem zweiten Umlenkwinkel, dessen Betrag kleiner als der Betrag des ersten Umlenkwinkels ist, umlenkt, und/oder dass das unmittelbar von dem Beleuchtungsobjektiv kommende Beleuchtungslichtbündel zuerst mittels des ersten Umlenkelements derart umgelenkt wird, dass es sich in einer zur optischen Achse des Beleuchtungsobjektivs senkrechten Ebene ausbreitet und es anschließend mittels des zweiten Umlenkelements zu der Grenzfläche umgelenkt wird, derart, dass es mit der Grenzfläche einen Winkel einschließt der oberhalb des für eine Totalreflexion kritischen Winkels liegt.

Das zweite Umlenkelement kann vorteilhaft als transparenter Block, insbesondere als Glasblock, ausgebildet sein. Insbesondere kann das zweite Umlenkelement ein ebenes Eintrittsfenster für das Beleuchtungslicht und ein ebenes Austrittsfenster aufweisen, wobei das Eintrittsfenster und das Austrittsfenster einen Winkel $\gamma$ zueinander aufweisen, der kleiner als 90 Grad ist. Eine solche Ausführung hat den besonderen Vorteil, dass ein Probenträger, der insbesondere als Schale ausgebildet sein kann, in einer Untersuchungsposition auf einem Austrittsfenster des zweiten Umlenkelements abgestellt werden kann, so dass die Grenzfläche zwischen der Probe und dem Probenträger durch das zweite Umlenkelement und durch den Boden der darauf abgestellten Schale, hindurch mit dem Beleuchtungslichtbündel beleuchtet werden kann.

Das Umlenkmittel, insbesondere ein erstes Umlenkelement des Umlenkmittels, kann beispielsweise einen Spiegel zum Umlenken des Beleuchtungslichtbündels aufweisen. Es ist, alternativ oder zusätzlich, auch möglich, dass das Umlenkmittel, insbesondere ein Umlenkelement des Umlenkmittels, das Beleuchtungslichtbündel durch Totalreflexion und/oder durch Brechung umlenkt.

Zwischen dem optisch transparenten Medium und dem Beleuchtungsobjektiv kann sich ein Mittel zum Anpassen der Brechungsindizes, wie beispielsweise ein Immersionsöl befinden.

Bei einer besonderen Ausführung ist der Abstand des Detektionsobjektivs relativ zu der Probe und relativ zu dem Umlenkmittel, insbesondere entlang der optischen Achse des Detektionsobjektivs, einstellbar, wozu eine entsprechende Verstelleinrichtung zum Einstellen des Abstandes vorhanden sein kann. Eine solche Verstellmöglichkeit, beispielsweise mit einem Gewindetrieb, hat den Vorteil, dass bei der evaneszenten Beleuchtung auftretende Effekte speziell bei der Änderung des Einfallswinkel des Beleuchtungslichtes, wie beispielsweise unterschiedliche Eindringtiefen, kompensiert werden können.

Bei einer ganz besonders vorteilhaften Ausführung des erfindungsgemäßen Verfahrens werden der Auftreffort und/oder der Einfallswinkel und/oder die Einfallsrichtung des Beleuchtungslichtbündels auf die Grenzfläche zwischen der Probe und dem optisch transparenten Medium während der mikroskopischen Untersuchung verändert.

Ein Ändern des Auftreffortes ermöglicht es beispielsweise, nacheinander unterschiedliche Probenbereiche zu beleuchten und zu untersuchen, indem das von diesen Probenbereichen ausgehende Fluoreszenzlicht einem Flächendetektor zur Erfassung eines zweidimensionalen Bildes, wie beispielsweise einem CCD-Detektor, zugeführt und eine Abbildung des jeweiligen Probenbereiches erzeugt wird. Insbesondere ist es beispielsweise möglich, die mit dem optisch transparenten Medium in Kontakt stehende Randfläche der Probe systematisch entlang einer Scanbahn abzuscannen und jedem dabei überstrichenen Probenbereich eine Flächenabbildung zuzuordnen. Aus den gewonnen Bildinformationen für die einzelnen Probenbereiche kann dann ein Gesamtabbild der Probe rekonstruiert werden. Beispielsweise kann der Auftreffort des Beleuchtungslichtbündels auf die Grenzfläche zwischen der Probe und dem optisch transparenten Medium kontinuierlich entlang einer, insbesondere mäanderförmigen, Scanbahn verändert werden. Auf diese Weise kann das gesamte Beobachtungsfeld des Detektionsobjektivs ausgenutzt werden, auch wenn die durch das Beleuchtungslichtbündel beleuchtete Fläche kleiner sein sollte als das Beobachtungsfeld des Detektionsobjektivs. Insbesondere können mehrere Abbildungen unterschiedlicher Probenbereiche aneinander gereiht werden.

Allerdings bleibt eine solche Vorgehensweise wohl eher besonderen Anwendungen vorbehalten, während zumeist lediglich ein ausreichend großer Beleuchtungsfokus erzeugt wird, um simultan den gesamten interessierenden Probenbereich evaneszent beleuchten zu können und um simultan mit einem Flächendetektor zur Erfassung eines zweidimensionalen Bildes, wie beispielsweise einem CCD-Detektor, ein Abbild des Probenbereichs zu erzeugen. Insbesondere hierbei ist es jedoch möglich und vorteilhaft, denselben interessierenden Probenbereich aus unterschiedlichen Richtungen und/oder mit unterschiedlichen Einfallswinkeln zu beleuchten, was in Detail weiter unten beschrieben ist.

Der Beleuchtungsfleck auf der Grenzfläche zwischen dem optisch transparenten Medium und der Probe weist auf Grund des großen Einfallswinkels, unter dem das Beleuchtungslichtbündel auf die Grenzfläche trifft, eine stark langgezogene, elliptische Form auf. Die Divergenz des Fokus entlang der Auftrefffläche sollte minimiert werden. Eine Fokuslänge, die vorzugsweise größer als das Doppelte der großen Halbachse der Ellipse der Auftrefffläche ist dabei ideal. Zu diesem Zweck weist das Beleuchtungsobjektiv vorzugsweise eine geringe numerische Apertur von beispielsweise 0,05 auf. Mit einem solchen Objektiv könnte ganz ungefähr und abhängig anderen Parametern, wie dem gewählten Einfallswinkel zur Grenzfläche zwischen dem optisch transparenten Medium und der Probe, eine Auftrefffläche von ca. 100 $\mu$m mal 10 $\mu$m beleuchtet werden.

Um insbesondere in Richtung der kleinen Halbachsen eine Vergrößerung der Auftrefffläche zu erreichen, kann statt eines kreisrunden Beleuchtungslichtbündels ein entsprechend orientierter Lichtstreifen, also ein im Querschnitt senkrecht zur Ausbreitungsrichtung längliches Beleuchtungslichtbündel, oder ein Quasi-Lichtstreifen in das Beleuchtungsobjektiv eingekoppelt werden, was weiter unten im Detail erläutert ist.

Bei einer besonderen Ausführung wird, alternativ oder zusätzlich zu einer Veränderung des Auftreffortes, der Einfallswinkel des Beleuchtungslichtbündels auf die Grenzfläche zwischen der Probe und dem optisch transparenten Medium geändert. Auf diese Weise ist es beispielsweise möglich, die Eindringtiefe des evaneszenten Feldes in die Probe und/oder die Größe des mit dem Beleuchtungslichtbündel beleuchteten Flecks zu variieren.

Alternativ oder zusätzlich zu einer Veränderung des Auftreffortes und/oder zu einer Veränderung des Einfallswinkels kann auch die Einfallsrichtung des Beleuchtungslichtbündels auf die Grenzfläche zwischen der Probe und dem optisch transparenten Medium verändert werden. Dies kann insbesondere erfolgen, um mit der Einfallsrichtung gleichzeitig auch die Linearpolarisationsrichtung des auf die Grenzfläche treffenden Lichtes zu drehen, wenn beispielsweise von der Linearpolarisationsrichtung abhängige Eigenschaften der Probe untersucht werden sollen.

Um den Auftreffort und/oder den Einfallswinkel und/oder die Einfallsrichtung des Beleuchtungslichtbündels auf die Grenzfläche zwischen der Probe und dem optisch transparenten Medium verändern zu können, kann insbesondere eine hinsichtlich des Ablenkwinkels einstellbare Strahlablenkeinrichtung verwendet werden. Diese kann beispielsweise einen kardanisch aufgehängten Kippspiegel oder zwei um unterschiedliche Drehachsen drehbare Kippspiegel beinhalten. Insbesondere kann vorgesehen sein, dass das Beleuchtungslichtbündel mit der Strahlablenkeinrichtung relativ zu dem Beleuchtungsobjektiv und/oder relativ zu dem Umlenkmittel bewegt wird.

Alternativ oder zusätzlich zur Verwendung einer einstellbaren Strahlablenkeinrichtung ist es auch möglich, dass der Auftreffort und/oder der Einfallswinkel und/oder die Einfallsrichtung des Beleuchtungslichtbündels auf die Grenzfläche zwischen der Probe und dem optisch transparenten Medium durch Bewegen der Probe relativ zu dem Beleuchtungsobjektiv und/oder relativ zu dem Beleuchtungslichtbündel verändert wird. Hierzu kann insbesondere ein vorzugsweise in drei Raumrichtungen verschiebbarer Probentisch verwendet werden.

Neben den genannten Möglichkeiten zum Verändern des Auftreffortes, des Einfallswinkels und/oder der Einfallsrichtung ist es auch möglich, diese Parameter durch Bewegen des Umlenkmittels relativ zur Probe zu verändern. Dies kann alternativ oder auch zusätzlich zur Verwendung einer Strahlablenkeinrichtung und/oder zu einem Bewegen der Probe erfolgen. Bei einer besonderen Ausführung ist das Umlenkmittel an dem Detektionsobjektiv oder Beleuchtungsobjektiv unbeweglich befestigt. Insbesondere, um jedoch den Auftreffort und/oder den Einfallswinkel und/oder die Einfallsrichtung ändern zu können, kann das Umlenkmittel vorteilhaft beweglich an dem Detektionsobjektiv oder Beleuchtungsobjektiv angeordnet, insbesondere befestigt, sein.

Bei einer besonderen Ausführung ist das Umlenkmittel im Frontbereich und/oder in der Nähe der Frontlinse angeordnet.

Bei einer besonderen Ausführung ist das Umlenkmittel als Spiegel mit mehreren Facetten ausgebildet. Insbesondere eine solche Ausführung ermöglicht es, den Auftreffort und/oder den Einfallswinkel und/oder die Einfallsrichtung des Beleuchtungslichtbündels auf die Grenzfläche zwischen der Probe und dem optisch transparenten Medium dadurch zu verändern, dass - beispielsweise mittels einer einstellbaren Strahlablenkeinrichtung oder durch Bewegen des Umlenkmittels - nacheinander unterschiedliche Facetten beleuchtet werden. Hierbei kann insbesondere vorgesehen sein, dass die Facetten räumlich unterschiedlich ausgerichtet sind, um jeweils eine Reflexion in eine andere Raumrichtung bewirken zu können. Alternativ ist es beispielsweise auch möglich, dass das Umlenkmittel eine kegelstumpfförmige Spiegelfläche aufweist. Eine solche Ausführung erlaubt es, das Beleuchtungslichtbündel kontinuierlich und eine Kegeloberfläche beschreibend um eine durch den Auftreffort verlaufende Achse rotieren zu können.

Die Beleuchtungsfleckgröße des Beleuchtungslichtbündels auf der Grenzfläche zwischen der Probe und dem optisch transparenten Medium kann beispielsweise durch Einschwenken einer Linse in den dem Beleuchtungsobjektiv vorgelagerten Teil des Strahlenganges des Beleuchtungslichtbündels verändert werden. Alternativ oder zusätzlich kann die Beleuchtungsfleckgröße beispielsweise durch Verschieben des Beleuchtungsobjektivs entlang der optischen Achse verändert werden. Es ist auch möglich, die Beleuchtungsfleckgröße des Beleuchtungslichtbündels auf der Grenzfläche zwischen der Probe und dem optisch transparenten Medium durch Verkippen einer im Strahlengang des Beleuchtungslichtbündels angeordneten, insbesondere planparallelen, transparenten Platte, zu verändern. Die transparente Platte kann insbesondere in einer zur Pupillenebene konjugierten Ebene angeordnet sein.

Wie erläutert, bietet das erfindungsgemäße Verfahren eine ganze Reihe von Möglichkeiten zum Einstellen des Auftreffortes und/oder des Einfallswinkels und/oder der Einfallsrichtung, was den ganz besonderen Vorteil hat, dass der Benutzer das Verfahren individuell an die jeweils vorliegenden probenspezifischen oder untersuchungsspezifischen Anforderungen anpassen kann.

Für den Fall, dass der Auftreffort geändert wird, insbesondere auch wenn ein Abrastern der Grenzfläche zwischen dem optisch transparenten Medium und der Probe erfolgt, kann zur Erzeugung einer aus mehreren Abbildungen zusammengesetzten Gesamtabbildung der Probe eine Zuordnung des jeweiligen Auftreffortes zu jeweils einem Probenbereich erfolgen.

Insbesondere kann vorgesehen sein, dass für jeden Auftreffort unter Berücksichtigung des Einfallswinkels und/oder des Brechungsindexes der Probe und/oder des Brechungsindexes des optisch transparenten Mediums und/oder der Wellenlänge des Beleuchtungslichtbündels und/oder dem Durchmesser des Auftreffortes ein zugehöriger Probenbereich ermittelt wird. Bei einer solchen Ermittlung werden vorzugsweise Fehler, insbesondere systembedingte Fehler, korrigiert oder kompensiert. Insbesondere kann eine Kompensation oder Korrektur von räumlichen Abweichungen des tatsächlichen Verlaufs des Beleuchtungslichtbündels relativ zu einem nach den Grundsätzen der geometrischen Optik zu erwartenden Strahlenverlauf, wie beispielsweise durch den Goos-Hänchen-Effekt, erfolgen. Vorzugsweise erfolgt auch eine Kompensation oder eine Korrektur der Fehler, die durch eine Abweichung der Dicke des optisch transparenten Mediums, insbesondere eines Deckglases, von einer Solldicke hervorgerufen würden. Beispielsweise ist es nicht selten, dass die tatsächliche Dicke eines Deckglases erheblich von der Standarddicke von zumeist 170 m abweicht. Kommt es durch dispersive Materialien im Strahlengang zu einer Abhängigkeit des Auftreffpunktes und/oder -winkels von der Farbe des Anregungslichtes, können auch diese Abweichungen kompensiert werden. Derartige Kompensationen und die Berücksichtigung derartiger Korrekturfaktoren haben den Vorteil, dass eine besonders gute Auflösung der Abbildung der zu untersuchenden Probe erreicht werden kann.

Bei einer vorteilhaften Ausführung wird jedem Auftreffort und/oder jedem zugeordneten Probenbereich jeweils wenigstens eine spezifische, insbesondere zweidimensionale, Abbildung zugeordnet, die durch Detektion des während der Beleuchtung des jeweiligen Auftreffortes von der Probe ausgehenden Detektionslichts gewonnen wurde.

Unter dem Begriff Abbildung wird insbesondere eine Reproduktion der Probe oder eines Teils der Probe in Form von, beispielsweise mittels eines PC, darstellbaren Daten und/oder in Form eines mit dem Auge sichtbaren Bildes verstanden.

Der Detektor kann insbesondere derart ausgebildet sein, dass er für jeden Pixel ein zur Lichtleistung des empfangenen Detektionslichts proportionales elektrisches Signal erzeugt. Insbesondere kann auch vorgesehen sein, dass der Detektor - simultan oder sequentiell - spezifisch Fluoreszenzlicht unterschiedlicher Wellenlängen empfängt und jeweils entsprechende elektrische Detektionssignale erzeugt. Beispielsweise kann es sich bei dem Detektor um einen CMOS-Sensor handeln, der in der Lage ist, Fluoreszenzlicht wellenlängenabhängig in unterschiedlichen Schichten (Kanälen) unabhängig voneinander zu detektieren. Alternativ kann der Detektor mehrere CCD-Detektoren beinhalten, denen mit dichroitischen Strahlteilern jeweils Detektionslicht unterschiedlicher Wellenlängenbereiche zugeleitet wird. Insbesondere für eine Detektion von Fluoreszenzlicht unterschiedlicher Wellenlängen kann das Anregungslichtbündel mehrere Anregungslichtwellenlängen, beispielsweise eines Mehrfarblasers oder mehrerer Einzellaser oder einer Weißlichtquelle, beinhalten.

Wie bereits erwähnt, kann das Beleuchtungslichtbündel im Querschnitt kreisrund sein. Bei einer solchen Ausführung ist die Auftrefffläche auf der Grenzfläche zwischen dem optisch transparenten Medium und der Probe naturgemäß langgezogen und elliptisch. Es ist jedoch, wie ebenfalls bereits erwähnt, auch möglich, dass das Beleuchtungslichtbündel die Form eines Lichtstreifens aufweist. Eine solche Strahlform kann beispielsweise mit einer im Strahlengang des Beleuchtungslichtbündels angeordneten Zylinderoptik erreicht werden. Alternativ ist es auch möglich, einen Quasi-Lichtstreifen dadurch zu erzeugen, dass ein im Querschnitt im wesentlichen rundes Beleuchtungslichtbündel beispielsweise mit Hilfe einer Strahlablenkeinrichtung in einer Raumrichtung derart schnell hin und her gewedelt wird, dass es im zeitlichen Mittel über eine Periode einem mittels einer Zylinderoptik erzeugten Lichtstreifen entspricht und/oder hinsichtlich der Detektionsergebnisse von einem mittels einer Zylinderoptik erzeugten Lichtstreifen nicht mehr zu unterscheiden ist.

Die Verwendung eines Beleuchtungslichtbündels in Form eines Lichtstreifens ermöglicht es, die Grenzfläche zwischen dem optisch transparenten Medium und der Probe großflächig zu beleuchten.

Eine besonders flexibel einsetzbare und präzise arbeitende Anordnung zur Ausführung des erfindungsgemäßen Verfahrens ergibt sich, wenn die optische Achse des Beleuchtungsobjektivs und die optische Achse des Detektionsobjektivs zueinander parallel oder koaxial ausgerichtet sind, wobei vorzugsweise das Detektionsobjektiv und das Beleuchtungsobjektiv mit ihren jeweiligen Frontlinsen einander zugewandt sind. Bei einer solchen Ausführung kann die zu untersuchende Probe in dem Zwischenraum zwischen dem Beleuchtungsobjektiv und dem Detektionsobjektiv angeordnet werden, wobei in vorteilhafter Weise viel Raum zum Führen und Lenken des Beleuchtungslichtbündels, insbesondere im Hinblick auf eine Beleuchtung der Grenzfläche aus unterschiedlichen Richtungen oder mit unterschiedlichen Einfallswinkeln, verbleibt. Dies hat den besonderen Vorteil, dass eine Vielzahl von Möglichkeiten zur Anpassung der Untersuchungsbedingungen an die jeweiligen Erfordernisse gegeben ist.

Bei einer ganz besonders vorteilhaften Ausführung des erfindungsgemäßen Verfahrens wird dieselbe Probe mit derselben Vorrichtung und einer anderen Untersuchungsmethode untersucht. Eine derartige Vorgehensweise hat den ganz besonderen Vorteil, dass mit unterschiedlichen Untersuchungsmethoden unabhängig voneinander Informationen über die Probe gewonnen werden können, beispielweise um diese Informationen gegeneinander abzugleichen oder um möglichst viele Informationen über die Probe zu Sammeln. Hierbei verbleibt die Probe vorzugsweise in dem Raum zwischen dem Beleuchtungsobjektiv und dem Detektionsobjektiv.

Zusätzlich zu einer Untersuchung, bei der eine wie oben beschriebene evaneszente Beleuchtung der Probe erfolgt, kann vorteilhaft eine SPIM-Untersuchung (SPIM: Single Plane Illumination Microscopy) durchgeführt werden, bei der das Beleuchtungslichtbündel, insbesondere in Form eines Lichtstreifens oder eines Quasi-Lichtstreifens, direkt und ohne Totalreflektion auf und durch die Probe gelenkt wird. Mittels eines solchen Lichtstreifens oder Quasi-Lichtstreifen wird eine Schicht der Probe vollständig durchleuchtet, wobei eine Detektion des senkrecht von dieser Schicht ausgehenden und durch das Detektionsobjektiv kollimierten Detektionslichts erfolgt. Um hierbei eine Ortsinformation bezüglich der einzelnen Probenorte der Schicht erhalten zu können, wird vorzugsweise ein Flächendetektor, beispielsweise ein CCD-Detektor, verwendet. Durch sukzessives Verschieben des Lichtstreifens relativ zur Probe kann Schicht für Schicht durchleuchtet und ein Schichtstapel von ortsaufgelösten Detektionssignalen und damit eine dreidimensionale Rekonstruktion der Probe erzeugt werden.

Insbesondere für eine SPIM-Untersuchung kann vorteilhaft vorgesehen sein, dass das Beleuchtungslichtbündel mittels eines weiteren, an dem Beleuchtungsobjektiv oder Detektionsobjektiv angeordneten Umlenkmittels nach dem Durchlaufen des Beleuchtungsobjektivs unmittelbar zur Probe umgelenkt wird. Dies vorzugsweise derart, dass sich der Lichtstreifen unter einem von Null Grad verschiedenen Winkel zur optischen Achse des Detektionsobjektivs, insbesondere unter einem Winkel von 90 Grad zur optischen Achse des Detektionsobjektivs, ausbreitet. Vorzugsweise ist die Ebene, in der sich der umgelenkte Lichtstreifen beziehungsweise Quasi-Lichtstreifen ausbreitet, senkrecht zur optischen Achse des Detektionsobjektivs ausgerichtet. Eine solche Ausrichtung ermöglicht eine besonders präzise Bildrekonstruktion, bei der aufwändige geometrische Korrekturrechnungen weitgehend vermieden sind.

Bei einer besonderen Ausführung sind an dem Detektionsobjektiv wenigstens zwei Umlenkmittel angeordnet von denen eines für die Umlenkung des Beleuchtungslichtbündels zur evaneszenten Probenbeleuchtung dient, während das weitere Umlenkmittel zum Umlenken des, insbesondere zu einem Lichtstreifen oder Quasi-Lichtstreifen geformten, Beleuchtungslichtbündels für eine SPIM-Untersuchung dient.

Um zwischen einer evaneszenten Probenbeleuchtung und einer direkten Probenbeleuchtung umschalten zu können, können die Umlenkmittel derart beweglich an dem Detektionsobjektiv angeordnet sein, dass wahlweise das eine oder das weitere Umlenkmittel in den Strahlengang des Beleuchtungslichtbündels eingeführt werden kann. Alternativ oder zusätzlich ist es auch möglich, das Beleuchtungslichtbündel mit Hilfe einer hinsichtlich des Ablenkwinkels einstellbaren Strahlablenkeinrichtung auf das jeweils gewünschte Umlenkmittel zu lenken.

Zumeist ist es von Vorteil, wenn das Beleuchtungslichtbündel derart in das Beleuchtungsobjektiv eingekoppelt wird, dass es außermittig durch das Beleuchtungsobjektiv verläuft, weil ein solcher Strahlverlauf es ermöglicht, die Probe auf oder wenigstens nahe der optischen Achse des Beleuchtungsobjektivs und/oder des Detektionsobjektivs zu positionieren, wobei die Möglichkeit gewahrt ist, die Probe aus ganz unterschiedlichen Richtungen beleuchten zu können.

Bei einer ganz besonders vorteilhaften Ausführungsform einer zur Ausführung des erfindungsgemäßen Verfahrens geeigneten Vorrichtung ist das transparente optische Medium selbst das Umlenkmittel oder zumindest Teil des Umlenkmittels. Insbesondere eine solche Ausführung ermöglicht es, die Probe zunächst mechanisch vollkommen unbelastet, beispielsweise in einer wassergefüllten Petrischale, insbesondere auf dem Austrittsfenster eines Umlenkelement des Umlenkmittels, zwischen dem Beleuchtungsobjektiv und dem Detektionsobjektiv zu positionieren, wobei vorzugsweise das Beleuchtungsobjektiv in einer inversen Mikroskop Anordnung räumlich unterhalb der Probe angeordnet ist, während sich das Detektionsobjektiv oberhalb der Probe befindet.

Das Umlenkmittel kann insbesondere einen Block aus transparentem Material, insbesondere ein Prisma, aufweisen. Hierbei kann beispielsweise vorgesehen sein, dass das aus dem Beleuchtungsobjektiv austretende Beleuchtungslichtbündel durch eine Hypotenusenfläche des Prismas in das Prisma eingekoppelt und an einer verspiegelten Kathetenfläche des Prismas in Richtung auf die an der Hypotenusenfläche anliegende Probe derart reflektiert wird, dass das Beleuchtungslichtbündel an der Hypotenusenfläche als Grenzfläche zur Probe totalreflektiert wird. Das von der Probe ausgehende Fluoreszenzlicht verläuft durch das Prisma zu dem Detektionsobjektiv, das das Detektionslicht kollimiert.

Bei einer anderen vorteilhaften Ausführung ist das optisch transparente Medium, das gleichzeitig als Umlenkmittel fungiert, insbesondere unmittelbar an eine Frontlinse des Detektionsobjektivs angekoppelt. Die Ankopplung kann beispielsweise durch die Verwendung eines optischen Kits zwischen der Frontlinse des Detektionsobjektivs und dem entsprechend gegengeformten Block aus transparentem Material realisiert sein. Beispielsweise kann die Frontlinse als Halbkugellinse ausgebildet sein, an die ein entsprechend gegengeformter mit einer halbkugelförmigen, konkaven Ankoppelfläche ausgestatteter Block aus transparentem Material, beispielsweise mit einem optischen Kit, angekoppelt ist. Alternativ kann auch vorgesehen sein, dass das optisch transparente Medium, das gleichzeitig als Umlenkmittel fungiert, eine Frontlinse des Detektionsobjektivs beinhaltet und/oder dass das Umlenkmittel als Frontlinse des Detektionsobjektivs fungiert. Diese Lösungen haben den ganz besonderen Vorteil, dass Verluste an Detektionslicht durch ungewollte Reflektionen auf dem Lichtweg des Detektionslichts über das optisch transparente Medium und die Frontlinse des Detektionsobjektivs vermieden oder zumindest minimiert sind.

Wie bereits erwähnt, kann vorteilhaft vorgesehen sein, dass das Umlenkmittel einen Block aus transparentem Material aufweist, wobei wenigstens eine Außenfläche des Blocks, insbesondere die Außenfläche des Blocks, die dazu ausgebildet und angeordnet ist, an einer Probe anzuliegen, als Einkoppelfenster für das Beleuchtungslichtbündel fungiert.

Wie ebenfalls bereits erwähnt, kann vorgesehen sein, dass eine, vorzugsweise andere, Außenfläche des Blocks als Spiegel ausgebildet ist oder einen Spiegel aufweist, um das Beleuchtungslichtbündel umzulenken. Wie bereits erwähnt, kann insbesondere für eine Untersuchung der selben Probe auf der Basis einer anderen Untersuchungsmethode ein weiteres Umlenkmittel zum Umlenken des Beleuchtungslichtbündels, insbesondere eines Beleuchtungslichtbündels in Form eines Lichtstreifens oder Quasi-Lichtstreifens, vorhanden, insbesondere an dem Detektionsobjektiv angeordnet, sein. Insbesondere können das Umlenkmittel und/oder das weitere Umlenkmittel beweglich an dem Detektionsobjektiv befestigt sein, beispielsweise um den Auftreffort und/oder den Einfallswinkel und/oder die Einfallsrichtung des Beleuchtungslichtbündels ändern zu können und/oder um geometrische Korrekturen, beispielsweise zur Korrektur des Goos-Hänchen-Effekts, vornehmen zu können. Insbesondere zu diesen Zwecken kann, wie bereits erwähnt, die Vorrichtung zur Ausführung des erfindungsgemäßen Verfahrens eine hinsichtlich des Ablenkwinkels einstellbare Strahlablenkeinrichtung aufweisen.

Insbesondere kann es sich bei der Strahlablenkeinrichtung auch um die Strahlablenkeinrichtung eines Rastermikroskops, insbesondere eines konfokalen Rastermikroskops handeln.

Eine Vorrichtung, die geeignet ist, das erfindungsgemäße Verfahren auszuführen, kann vorteilhaft auf der Basis eines Rastermikroskops, insbesondere eines konfokalen Rastermikroskops, aufgebaut sein. Hierbei bietet sich insbesondere die Verwendung eines inversen Mikroskopstatives an. Von besonderem Vorteil ist insoweit die Verwendung eines (möglicherweise in einem Labor ohnehin vorhandenen) Rastermikroskops zur Ausführung des erfindungsgemäßen Verfahrens.

Bei einer besonders vorteilhaften Ausführung des erfindungsgemäßen Verfahrens wird die Lichtleistung des an der Grenzfläche totalreflektierten Beleuchtungslichtbündels gemessen. Da dem Beleuchtungslichtbündel bei der TIRF-Anregung der zu untersuchenden Probe Photonen entnommen werden, ermöglicht es eine Messung der Lichtleistung des an der Grenzfläche totalreflektierten Beleuchtungslichtbündels, Rückschlüsse auf Eigenschaften der Probe zu ziehen. Auch ist es möglich, das an der Grenzfläche totalreflektierte Beleuchtungslichtbündel zur Erzeugung einer überaufgelösten Abbildung der Probe zu verwenden.

Während ein Detektor das von der Probe auf Grund der TIRF-Anregung ausgehende Detektionslicht detektiert, kann ein weiterer Detektor vorhanden sein, der das an der Grenzfläche totalreflektierte Beleuchtungslichtbündel empfängt. Insbesondere kann das an der Grenzfläche totalreflektierte Beleuchtungslichtbündel zurück zu dem Beleuchtungsobjektiv umgelenkt werden und durch das Beleuchtungsobjektiv verläuft, um es dem weiteren Detektor zuzuführen. Beispielsweise kann das an der Grenzfläche totalreflektierte Beleuchtungslichtbündel mittels des, insbesondere einen kegelstumpfförmigen Spiegel oder ein hexagonales Umlenkelement aufweisenden, Umlenkmittels zurück zu dem Beleuchtungsobjektiv umgelenkt werden. Alternativ oder zusätzlich kann auch vorgesehen sein, dass das Umlenkmittel wenigstens zwei einander gegenüberliegende Umlenkelemente aufweist, von denen eines das von dem Beleuchtungsobjektiv kommende Beleuchtungslichtbündel umlenkt und das andere das an der Grenzfläche totalreflektierte Beleuchtungslichtbündel umlenkt, und/oder dass das Umlenkmittel mehrere jeweils paarweise einander gegenüberliegende Umlenkelemente aufweist, von denen jeweils eines das von dem Beleuchtungsobjektiv kommende Beleuchtungslichtbündel umlenkt und das jeweils andere das an der Grenzfläche totalreflektierte Beleuchtungslichtbündel umlenkt.

Der Detektor kann als Punktdetektor oder auch als Flächendetektor ausgebildet sein. Wenn als Grundlage für die erfindungsgemäße Vorrichtung ein Rastermikroskop, insbesondere ein konfokales Rastermikroskop oder Multiphoton-Rastermikroskop, verwendet wird, kann zum Detektieren der Lichtleistung der ohnehin vorhandene Lichtdetektor des Rastermikroskops zum Messen der Lichtleistung des an der Grenzfläche totalreflektierten Beleuchtungslichtbündel verwendet werden. Dieser ist zumeist als Photomultiplier oder als Anordnung mehrerer Photomultiplier ausgebildet. Im Falle der Multiphoton-Rastermikroskopie können die sogenannten Non-Descanning-Detektoren verwendet werden, die zumeist in unmittelbarer Nähe zu dem Beleuchtungsobjektiv angeordnet sind.

Wie bereits erwähnt kann das Umlenkmittel beispielsweise einen kegelstumpfförmigen Spiegel oder ein hexagonales Umlenkelement aufweisen. Ein besonders vorteilhaftes Umlenkelement ist hierbei ein Umlenkmittel, dessen Umlenkelement hexagonal angeordnet ist. Ein solches Umlenkmittel erlaubt es, die Grenzfläche aus sechs unterschiedlichen Richtungen zu beleuchten.

Wie bereits erwähnt ist es vorteilhafter Weise nicht notwendig, dass das Beleuchtungsobjektiv eine besonders große numerische Apertur aufweist. Insbesondere kann das Beleuchtungsobjektiv eine numerische Apertur aufweisen, die kleiner als 0,2, insbesondere kleiner als 0,1 ist, und/oder die 0,05 beträgt. Das Beleuchtungsobjektiv kann insbesondere eine Vergrößerung im Bereich von 2 bis 10, insbesondere im Bereich von 2 bis 5, insbesondere von 2,5 oder 5,0 aufweisen. Insbesondere können als Beleuchtungsobjektiv und/oder als Detektionsobjektiv auch Wasserimmersionsobjektive verwendet werden.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind. Dabei zeigen:

Fig. 1      eine Detailansicht eines ersten Ausführungsbeispiels einer Vorrichtung zur Ausführung des erfindungsgemäßen Verfahrens mit einem einen Spiegel aufweisenden Umlenkmittel,

Fig. 2      eine Detailansicht eines zweiten Ausführungsbeispiels einer Vorrichtung zur Ausführung eines erfindungsgemäßen Verfahrens, bei der das Umlenkmittel als Block aus einem transparenten Material gebildet ist,

Fig. 3      eine Detailansicht eines dritten Ausführungsbeispiels einer erfindungsgemäßen Vorrichtung zur Ausführung des erfindungsgemäßen Verfahrens, bei der das Umlenkmittel zusätzlich die Funktion einer Frontlinse des Detektionsobjektivs übernimmt,

Fig. 4      eine Detailansicht eines vierten Ausführungsbeispiels, bei dem sowohl eine evaneszente Probenbeleuchtung, als auch eine direkte Probenbeleuchtung ermöglicht wird. Gezeigt wird die Stellung für eine evaneszente Probenbeleuchtung,

Fig. 5      die Detailansicht des vierten Ausführungsbeispiels, in der Einstellung für eine direkte Probenbeleuchtung zur SPIM-Untersuchung,

Fig. 6a und 6b eine schematische Darstellung zur Auftrefffläche des Beleuchtungslichtbündels,

Fig. 7a und 7b eine schematische Darstellung zur Veränderung des Auftreffortes des Beleuchtungslichtbündels,

Fig. 8 eine Detailansicht eines sechsten Ausführungsbeispiels mit einem Umlenkmittel, das einen Facettenspiegel aufweist,

Fig. 9 eine Detailansicht eines siebenten Ausführungsbeispiels mit einem Umlenkmittel, das einen kegelstupfförmigen Spiegel aufweist,

Fig. 10 eine Detailansicht eines achten Ausführungsbeispiels mit einer Strahlablenkeinrichtung zum Verändern des Auftreffortes und/oder des Einfallswinkels und/oder der Einfallsrichtung.

Fig. 11 eine Detailansicht eines neunten Ausführungsbeispiels einer erfindungsgemäßen Vorrichtung,

Fig. 12 eine Detailansicht eines Umlenkelements des neunten Ausführungsbeispiels,

Fig. 13 eine Detailansicht eines alternativen Strahlverlaufs im Bereich des Umlenkelements,

Fig. 14 eine Detailansicht eines zehnten Ausführungsbeispiels einer erfindungsgemäßen Vorrichtung,

Fig. 15 die Detailansicht eines elften Ausführungsbeispiels einer erfindungsgemäßen Vorrichtung,

Fig. 16 eine Detailansicht eines zwölften Ausführungsbeispiels einer erfindungsgemäßen Vorrichtung,

Fig. 17 eine Detailansicht eines Ausführungsbeispiels eines Umlenkmittels einer erfindungsgemäßen Vorrichtung,

Fig. 18 eine Detailansicht eines anderen Ausführungsbeispiels eines Umlenkmittels einer erfindungsgemäßen Vorrichtung, und

Fig. 19 eine Detailansicht eines dreizehnten Ausführungsbeispiels einer erfindungsgemäßen Vorrichtung.

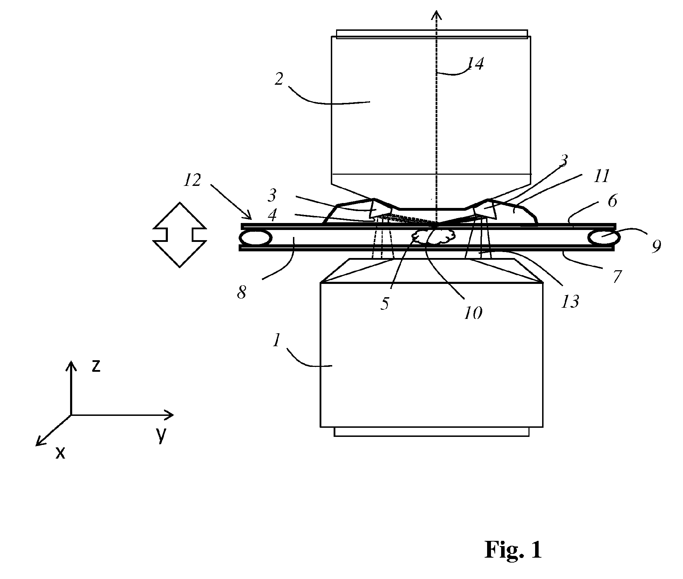

Figur 1 zeigt eine Detailansicht eines ersten Ausführungsbeispiels einer Vorrichtung, anhand der eine mögliche Ausführung des erfindungsgemäßen Verfahrens nachfolgend erläutert wird.

Die Vorrichtung weist ein Beleuchtungsobjektiv 1 und ein Detektionsobjektiv 2 auf. Das Beleuchtungsobjektiv 1 kann beispielsweise als Ölobjektiv ausgebildet sein. Es ist auch möglich, dass das Beleuchtungsobjektiv 1 als Wasser- oder als Luftobjektiv ausgebildet ist. Insbesondere kann das Beleuchtungsobjektiv 1 auch sehr einfach und kostengünstig ausgebildet sein. Das Beleuchtungsobjektiv 1 und das Detektionsobjektiv 2 sind hinsichtlich ihrer optischen Achsen koaxial zueinander und einander entgegengesetzt angeordnet. An dem Detektionsobjektiv 2 ist ein Umlenkmittel 3 befestigt, das eine, insbesondere kegelabschnittförmige, Spiegelfläche 4 aufweist.

Die zu untersuchende Probe 5 ist zwischen einem ersten Deckglas 6 und einem zweiten Deckglas 7 in einem wässrigen Nährmedium angeordnet. Die Deckgläser 6, 7 sind mittels einer umlaufenden Dichtung 9 gegeneinander abgedichtet, so dass das wässrige Nährmedium 8 nicht entweichen kann.

Zwischen dem Deckglas 6, das dem Detektionsobjektiv 2 zugewandt ist, und dem Detektionsobjektiv 2 befindet sich Immersionsöl oder Wasser 11, in das auch das Umlenkmittel 3 eingetaucht ist. Es ist auch denkbar in dem Zwischenraum nur mit Luft zu arbeiten, da die Totalreflexion nur am Übergang vom dichteren Medium in weniger dichtes Medium erfolgt (Übergang zur Probe).

Das Deckglas 6, das dem Detektionsobjektiv 2 zugewandt ist, dient als optisch transparentes Medium 12, das einen höheren Brechungsindex aufweist, als die Probe 5. Ein Beleuchtungslichtbündel 13 wird von dem Beleuchtungsobjektiv 1 fokussiert und durchläuft nach dem Austreten aus der Frontlinse des Beleuchtungsobjektivs 1 die Deckgläser 6, 7, ohne mit der Probe 5 in Wechselwirkung zu treten und gelangt anschließend zu dem Umlenkmittel 3. Von diesem wird das Beleuchtungslichtbündel 13 in Richtung auf die zu untersuchende Probe 5 derart umgelenkt, dass das Beleuchtungslichtbündel 13 auf die Grenzfläche 10 zwischen dem optisch transparenten Medium 12 und der Probe 5 trifft und dort innerhalb des Bildfeldes des Detektionsobjektivs 2 zur evaneszenten Beleuchtung der Probe 5 totalreflektiert wird. Das von der Probe 5 ausgehende Fluoreszenzlicht 14 durchläuft das Detektionsobjektiv 2 und gelangt anschließend zu einem nicht eingezeichneten Flächendetektor zur Erfassung eines zweidimensionalen Bildes, wie beispielsweise einem CCD-Detektor. Mit Hilfe einer (nicht eingezeichneten) Strahlablenkeinrichtung kann das Beleuchtungslichtbündel 13 auf unterschiedliche Positionen der kegelstumpfförmigen oder facettenförmigen Spiegelfläche 4 gelenkt werden, um das Beleuchtungslichtbündel 13 aus unterschiedlichen Einfallsrichtungen auf die Grenzfläche 10 zwischen dem optisch transparenten Medium 12 und der Probe 5 zu lenken. Dies ist in der Figur nur schematisch durch einen gestrichelt eingezeichneten, geänderten Strahlverlauf des Beleuchtungslichtbündels 13 angedeutet.

Es ist insbesondere für eine gute Auflösung wichtig, dass der Fokus des Beleuchtungslichtbündels 13, insbesondere unter Berücksichtigung geometrischer Korrekturen, wie beispielsweise zur Kompensation einer Abweichung einer Dicke des optisch transparenten Mediums 12, insbesondere des Deckglases 6, von einer Solldicke, genau auf der Grenzfläche 10 zwischen dem optisch transparenten Medium 12 und der Probe 5 liegt. Um dies genau einstellen zu können, können die Deckgläser 6, 7 zusammen mit der Probe 5 relativ zu dem Beleuchtungsobjektiv 1 in Z-Richtung justiert werden. Hierzu kann beispielsweise ein in Z-Richtung einstellbarer Verschiebetisch vorhanden sein.

Darüber hinaus ist es auch möglich, die Deckgläser 6, 7 zusammen mit der dazwischen eingebrachten Probe 5 in X-Richtung und/oder Y-Richtung zu verschieben, um den Auftreffort des Beleuchtungslichtbündels 13 auf die Grenzfläche 10 einstellen zu können. Alternativ oder zusätzlich kann ein Verändern des Auftreffortes und/oder des Einfallswinkels und/oder Einfallsrichtung auch mit Hilfe der hinsichtlich des Ablenkwinkels einstellbaren Strahlablenkeinrichtung erfolgen, also durch einen (parallelen) Versatz des Beleuchtungslichtbündels 13 gegenüber dem Umlenkmittel 3.

Insbesondere um zu gewährleisten, dass die numerische Apertur des Detektionsobjektivs 2 zum Sammeln des Detektionslichts 14 auch ausgenutzt wird, kann das Detektionsobjektiv 2 ebenfalls in Z-Richtung und/oder in X-Y-Richtung relativ zur Probe justiert werden.

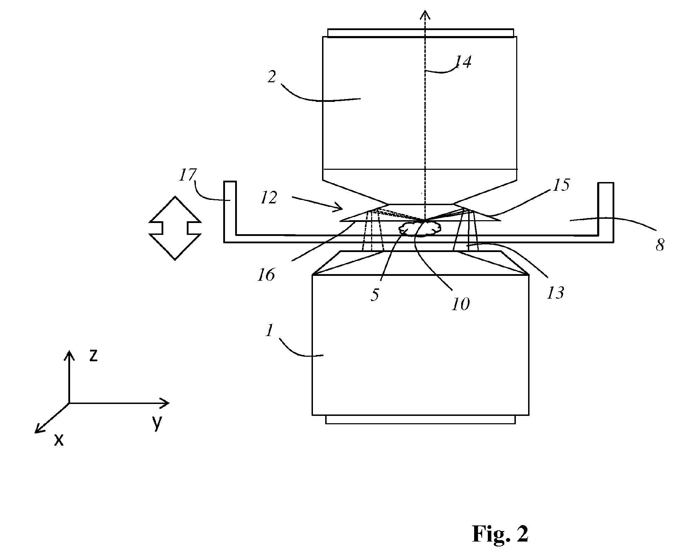

Figur 2 zeigt eine Detailansicht eines zweiten Ausführungsbeispiels, bei dem das optisch transparente Medium 12 als Prisma ausgebildet ist, das sowohl eine verspiegelte Fläche 15 zum Umlenken des von dem Beleuchtungsobjektiv 1 kommenden Beleuchtungslichtbündel 13 aufweist, als auch eine Außenfläche 16, die dazu ausgebildet und angeordnet ist, mit einer Probe 5 in Kontakt zu treten, so dass sich zwischen der Außenfläche 16 und der Probe 5 eine Grenzfläche 10 zur totalinternen Reflektion des Beleuchtungslichtbündels 13 bildet.

Die Probe 5 ist in einem mit einem wässrigen Nährmedium 8 gefüllten, zum Detektionsobjektiv 2 hin offenen Behältnis 17 angeordnet. Eine solche Ausführung hat den ganz besonderen Vorteil, dass die Probe 5 erst unmittelbar vor der eigentlichen Untersuchung mit dem optisch transparenten Medium 12 in Kontakt tritt und erst dann druckbelastet wird. Eine Schädigung der Probe 5 durch andauernde Druckbelastung vor der eigentlichen Untersuchung ist auf diese Weise vermieden oder zumindest sehr verringert.

Wie bei dem in Figur 1 dargestellten Ausführungsbeispiel verläuft das Detektionslicht 14 durch das Detektionsobjektiv 2 zu einem nicht dargestellten Flächendetektor zur Erfassung eines zweidimensionalen Bildes, wie beispielsweise einem CCD-Detektor.

Auch bei der in Figur 2 dargestellten Ausführung ist es möglich, beispielsweise mit Hilfe einer hinsichtlich des Ablenkwinkels einstellbaren Strahlablenkeinrichtung, den Auftreffort und/oder den Einfallswinkel und/oder die Einfallsrichtung des Beleuchtungslichtbündels 13 auf die Grenzfläche 10 zwischen dem optisch transparenten Medium 12 und der Probe 5 präzise und für die jeweilige Untersuchung flexibel angepasst einzustellen.

Bei diesem Ausführungsbeispiel ist das optisch transparente Medium 12, beispielsweise mit einem optischen Kit oder mit einem Immersionsöl, unmittelbar an die Frontlinse des Detektionsobjektivs 2 angekoppelt. Zur Untersuchung der Probe 5 wird das optisch transparente Medium 12 in das Wasser 8 eingetaucht und an die Probe 5 angelegt.

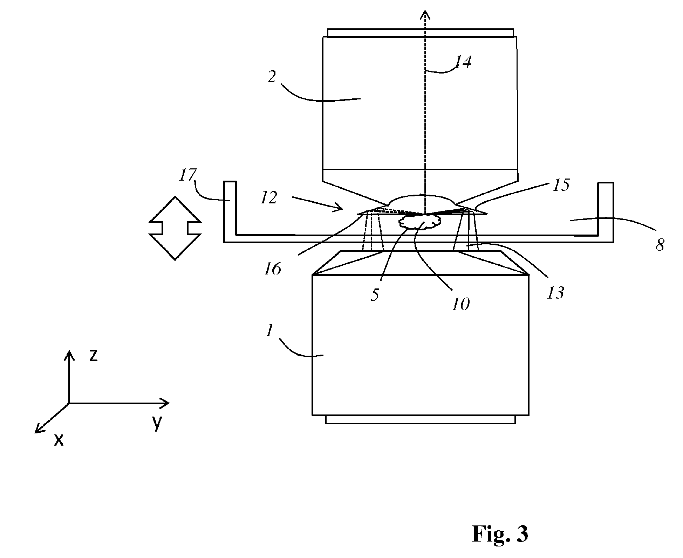

Figur 3 zeigt eine Detailansicht eines dritten Ausführungsbeispiels, das sich von dem in Figur 2 dargestellten Ausführungsbeispiel dadurch unterscheidet, dass das optisch transparente Medium 12 derart ausgebildet ist, dass es zusätzlich die Funktion der Frontlinse des Detektionsobjektivs 2 übernehmen kann. Insbesondere kann das optisch transparente Medium 12 eine Frontlinse und einen als Umlenkmittel fungierenden und eine Außenfläche zur Anlage an die Probe 5 aufweisenden Block beinhalten, die beide einstückig und zusammen hergestellt sind. Eine solche Ausführung ist besonders robust und wenig störungsanfällig.

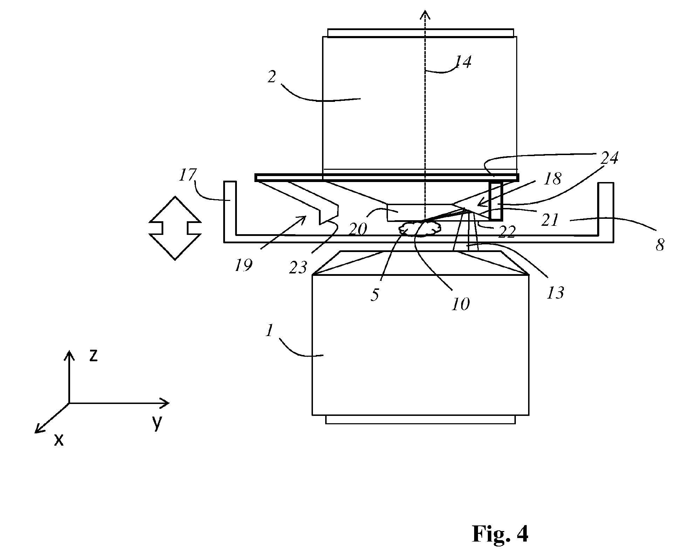

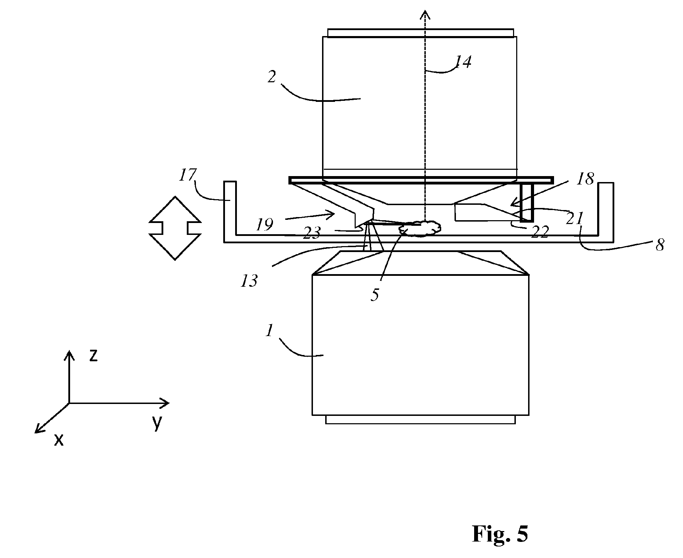

Die Figuren 4 und 5 zeigen jeweils eine Detailansicht eines vierten Ausführungsbeispiels einer Vorrichtung zum Ausführen eines erfindungsgemäßen Verfahrens. Die Vorrichtung weist ein erstes Umlenkmittel 18 und ein weiteres Umlenkmittel 19 auf. Sowohl das erste Umlenkmittel 18, als auch das weitere Umlenkmittel 19 sind an dem Detektionsobjektiv 2 befestigt. Das erste Umlenkmittel 18 beinhaltet ein optisch transparentes Medium 20, das eine verspiegelte Fläche 21 zum Umlenken eines Beleuchtungslichtbündels 13 aufweist. Außerdem weist das optisch transparente Medium 20 eine Außenfläche 22 auf, die dazu ausgebildet und angeordnet ist, mit einer Probe 5 zur Ausbildung einer Grenzfläche 10 für eine totalinterne Reflektion in Kontakt zu treten.

Figur 4 zeigt eine der beiden möglichen Einstellungen der Vorrichtung, nämlich die Einstellung zur Durchführung einer Untersuchung bei evaneszenter Probenbeleuchtung. Auch bei dieser Einstellung kann, wie weiter oben ausführlich beschrieben ist, eine Veränderung des Auftreffortes und/oder des Einfallswinkels und/oder der Einfallsrichtung der Beleuchtungslichtbündels 13 auf die Grenzfläche 10 erfolgen.

Die Vorrichtung ist zusätzlich dazu ausgebildet, eine Untersuchung an derselben Probe 5 mittels eines anderen Untersuchungsverfahrens, wie insbesondere SPIM durchzuführen. Hierzu wird das Beleuchtungslichtbündel 13, insbesondere in Form eines Lichtstreifens oder eines Quasi-Lichtstreifens, auf das weitere Umlenkmittel 19 gelenkt. Das weitere Umlenkmittel 19 weist eine zweite Spiegelfläche 23 auf.

Das weitere Umlenkmittel 19 lenkt das Beleuchtungslichtbündel 13 derart um, dass es sich nach der Umlenkung in einer zur optischen Achse des Detektionsobjektivs 2 senkrechten Ebene ausbreitet. Auf diese Weise wird eine Schicht der Probe 5 durchleuchtet und das von der Probe ausgehende Detektionslicht 14, das durch das Detektionsobjektiv 2 verläuft, vorzugsweise ortsaufgelöst, detektiert. Zum ortsaufgelösten Detektieren des von der Probe 5 ausgehenden Detektionslichts 14 kann beispielsweise ein Flächendetektor zur Erfassung eines zweidimensionalen Bildes, insbesondere ein CCD-Detektor oder SCMOS-Detektor, dienen. Der Detektor ist der besseren Übersicht halber in die Figuren nicht eingezeichnet.

Zum Einstellen einer korrekten Fokuslage und/oder zum Kompensieren von besonderen geometrischen Effekten, wie sie insbesondere bei einer evaneszenten Probenbeleuchtung auftreten können, sind das erste Umlenkmittel 18 und das weitere Umlenkmittel 19 beweglich und hinsichtlich ihrer Relativposition zu dem Detektionsobjektiv 2 einstellbar an dem Detektionsobjektiv 2 befestigt. Hierzu dient eine einstellbare Befestigungseinrichtung 24.

Auch bei diesem Ausführungsbeispiel ist es von Vorteil, wenn die einzelnen Komponenten hinsichtlich ihrer räumlichen Position relativ zu einander justiert werden können, beispielsweise um die Fokuslage korrekt einzustellen und/oder den Auftreffort und/oder den Einfallswinkel und/oder die Einfallsrichtung einstellen zu können.

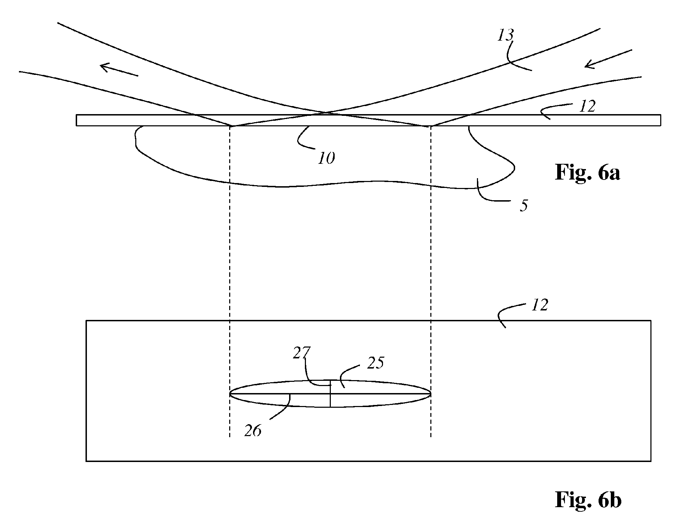

Die Figuren 6a und 6b zeigen eine schematische Darstellung zur Auftrefffläche 25 des Beleuchtungslichtbündels 13 auf die Grenzfläche 10 zwischen dem optisch transparenten Medium 12 und der Probe 5 für eine evaneszente Probenbeleuchtung.

Um einen möglichst großen Beleuchtungsfleck 25 zu erhalten, ist der Fokus des Beleuchtungslichtbündels 13 in Beleuchtungslichtausbreitungsrichtung möglichst lang und weist einen großen Fokusdurchmesser auf. Bei einem im Querschnitt senkrecht zur Ausbreitungsrichtung kreisrunden Beleuchtungslichtbündel ist die Auftrefffläche 25 auf der Grenzfläche 10 zwischen dem optisch transparenten Medium 12 und der Probe 5 naturgemäß elliptisch. Insoweit sollte die Fokuslänge, insbesondere durch Verwendung eines Beleuchtungsobjektivs 1 mit niedriger numerischer Apertur, vorzugsweise größer als das Doppelte der großen Halbachse 26 der Ellipse der Auftrefffläche 25 sein. Der Fokusdurchmesser entspricht in etwa dem Doppelten der kleinen Halbachse 27 der elliptischen Auftrefffläche 25. In dieser Richtung kann eine Vergrößerung der Auftrefffläche 25 beispielsweise durch Verwendung eines Beleuchtungslichtbündels 13 in Form eines Lichtstreifens oder eines Quasi-Lichtstreifens anstelle eines im Querschnitt kreisrunden Beleuchtungslichtbündels 13 erreicht werden.

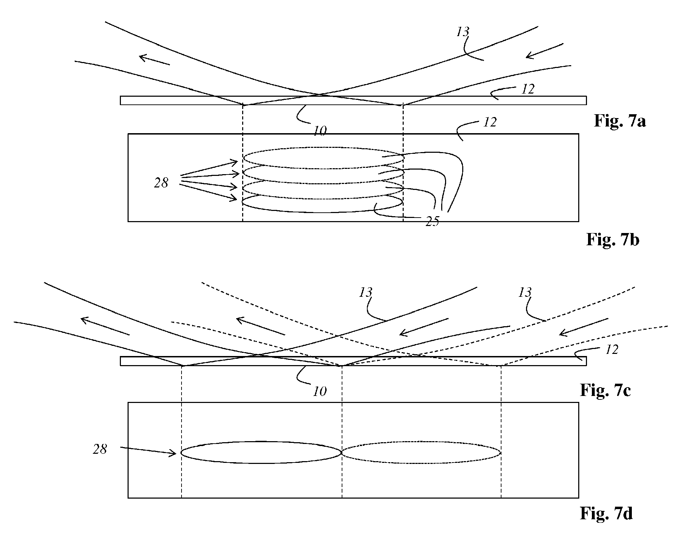

Die Figuren 7a und 7b zeigen eine schematische Darstellung zur Veränderung des Auftreffortes 28 des Beleuchtungslichtbündels 13 auf die Grenzfläche 10 zwischen dem optisch transparenten Medium 12 und der Probe 5.

Durch Bewegen der Probe 5 relativ zu dem Beleuchtungslichtbündel 13, beispielsweise mit einem einstellbaren Probentisch, und/oder durch Bewegen des Beleuchtungslichtbündel 13 relativ zur Probe 5, beispielsweise mit einer hinsichtlich des Ablenkwinkels einstellbaren Strahlablenkeinrichtung, und/oder durch Verschieben des Umlenkmittels 3 kann der Auftreffort 28 sukzessive verändert werden, also die Auftrefffläche 25 relativ zur Probe verschoben werden. Dies beispielsweise, um mehrere zweidimensionale Abbildungen von unterschiedlichen Probenbereichen zu gewinnen, die anschließend zu einer Gesamtabbildung zusammengesetzt werden können. Wird beispielsweise die Probe 5 bezogen auf Figur 7a senkrecht zur Zeichenebene relativ zum Beleuchtungslichtbündel 13 verschoben, können die Auftrefforte 28 wie in Figur 7b schematisch dargestellt aneinander gereiht und für jeden Auftreffort eine zweidimensionale Abbildung erzeugt werden. Alternativ kann auch die Beleuchtung während der Aufnahme eines Bildes innerhalb des Bildfeldes verschoben werden.

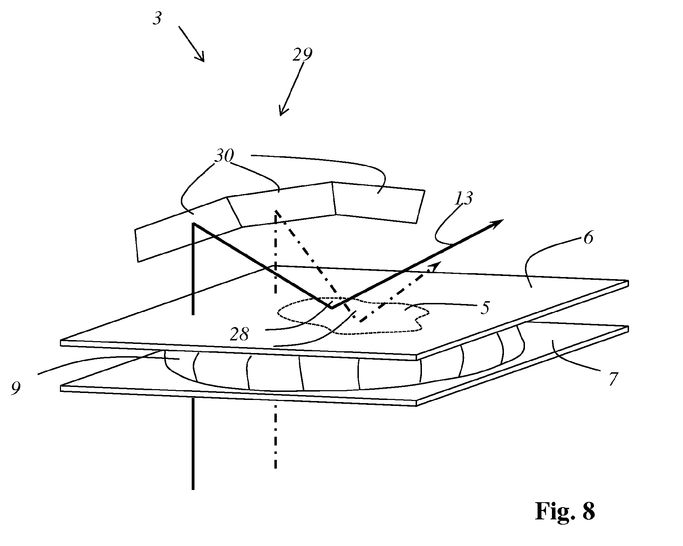

Figur 8 zeigt eine Detailansicht eines Ausführungsbeispiels mit einem Umlenkmittel 3, das einen Facettenspiegel 29 aufweist. Der Facettenspiegel 29 weist mehrere unterschiedliche Facetten mit unterschiedlicher räumlicher Position und Ausrichtung auf.

Die zu untersuchende Probe 5 ist zwischen einem ersten Deckglas 6 und einem zweiten Deckglas 7 in einem wässrigen Nährmedium 8 angeordnet. Die Deckgläser 6, 7 sind mittels einer umlaufenden Dichtung 9 gegeneinander abgedichtet, so dass das wässrige Nährmedium 8 nicht entweichen kann.

Bei diesem Ausführungsbeispiel kann beispielsweise mit einer (in dieser Figur nicht dargestellten) Strahlablenkeinrichtung das Beleuchtungslichtbündel 13 auf unterschiedliche Facetten 30 gelenkt werden, um das Beleuchtungslichtbündel 13 an unterschiedlichen Auftrefforten 28 und/oder unter unterschiedlichen Einfallswinkeln und/oder mit unterschiedlichen Einfallsrichtungen des Beleuchtungslichtbündels 13 auf die Grenzfläche 10 zwischen der Probe 5 und dem optisch transparenten Medium 12, nämlich dem Deckglas 6, treffen zu lassen. Alternativ kann statt einer Veränderung der räumlichen Position und/oder Ausrichtung des Beleuchtungslichtbündels 13 auch der Facettenspiegel 29, beispielsweise mittels einer (in dieser Figur nicht eingezeichneten) Positioniereinheit relativ zu dem Beleuchtungslichtbündel 13 bewegt werden.

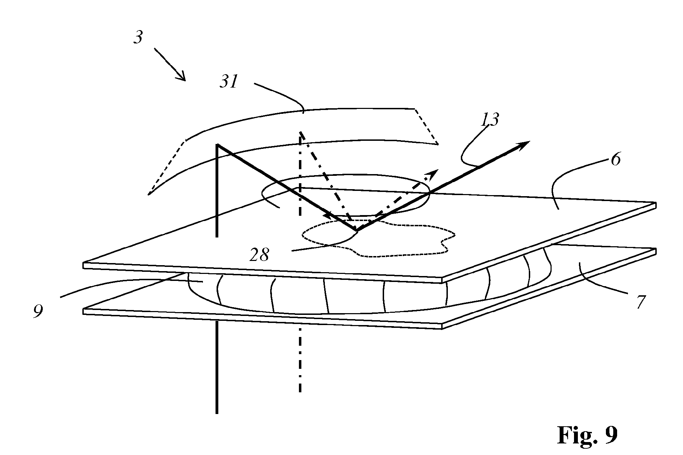

Fig. 9 zeigt eine Detailansicht eines Ausführungsbeispiels mit einem Umlenkmittel 3, das einen kegelstumpfförmigen Spiegel 31, von dem der besseren Übersicht halber nur ein Ausschnitt dargestellt ist, aufweist.

Die zu untersuchende Probe 5 ist zwischen einem ersten Deckglas 6 und einem zweiten Deckglas 7 in einem wässrigen Nährmedium 8 angeordnet. Die Deckgläser 6, 7 sind mittels einer umlaufenden Dichtung 9 gegeneinander abgedichtet, so dass das wässrige Nährmedium 8 nicht entweichen kann.

Der kegelstupfförmigen Spiegel 31 ermöglicht es beispielsweise, das Beleuchtungslichtbündel 13, insbesondere kontinuierlich und eine Kegeloberfläche beschreibend, um eine durch den Auftreffort 28 verlaufende Achse rotieren zu können.

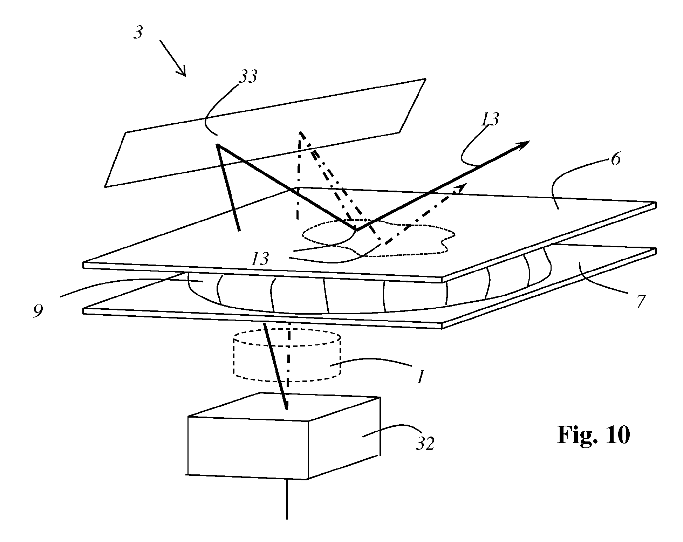

Fig. 10 zeigt eine Detailansicht eines Ausführungsbeispiels mit einer hinsichtlich des Ablenkwinkels einstellbaren Strahlablenkeinrichtung 32, die beispielsweise einen oder mehrere Galvanometerspiegel beinhalten kann, zum Verändern des Auftreffortes 28 und/oder des Einfallswinkels und/oder der Einfallsrichtung des Beleuchtungslichtbündels 13 auf die Grenzfläche zwischen der Probe 5 und dem optisch transparenten Medium 12, nämlich dem Deckglas 6.

Bei diesem Ausführungsbeispiel ist das Umlenkmittel 3 als ebener Spiegel 33 ausgebildet. Durch Verändern des Auftreffortes der Beleuchtungslichtbündels 13 auf den ebenen Spiegel 33 kann der Auftreffort 28 und/oder der Einfallswinkel und/oder die Einfallsrichtung des Beleuchtungslichtbündels 13 auf die Grenzfläche zwischen der Probe 5 und dem optisch transparenten Medium 12 verändert werden.

Das Beleuchtungsobjektiv 1 und der Verlauf des Beleuchtungslichtbündels 13 ist in dieser Figur lediglich schematisch und nicht vollständig der Wirklichkeit entsprechend dargestellt, um das Prinzip der Veränderung der Beleuchtungsbedingungen zu illustrieren.

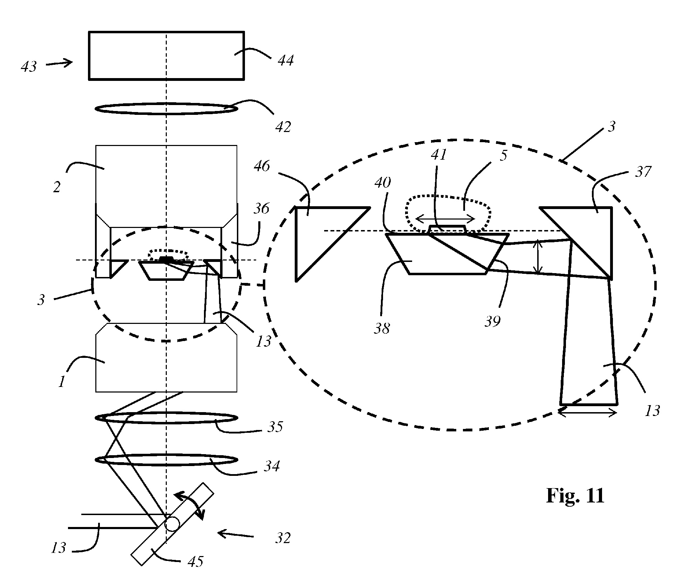

Fig. 11 zeigt eine Detailansicht eines neunten Ausführungsbeispiels einer erfindungsgemäßen Vorrichtung, die ein Beleuchtungsobjektiv 1 und ein Detektionsobjektiv 2, zwischen denen eine zu untersuchende Probe 5 in einer Untersuchungsposition angeordnet ist, die mit einem optisch transparenten Medium 20 in Kontakt steht, das einen höheren Brechungsindex aufweist als die Probe 5. Die Probe kann dabei auch auf einem Deckglas präpariert sein, welches mit dem optisch transparenten Medium 20 in Kontakt steht, wobei im Zwischenraum ein Immersionsmedium zur Minimierung von Sprüngen im Brechungsindex eingefügt werden kann.

Ein Beleuchtungslichtbündel 13 gelangt über eine hinsichtlich des Ablenkwinkels einstellbare Strahlablenkeinrichtung 32, eine Scanlinse 34 und eine Tubuslinse 35 zu dem Beleuchtungsobjektiv 1, durchläuft dieses und wird anschließend von dem Umlenkmittel 3, das an dem Detektionsobjektiv 2 mittels Halteelementen 36 befestigt ist, umgelenkt.

Das Umlenkmittel 3 weist ein erstes Umlenkelement 37 und ein zweites Umlenkelement 38 auf, wobei das optisch transparente Medium 20 (neben seiner Funktion, die ebene Grenzfläche 10 zur Probe 5 bereit zu stellen) auch das zweite Umlenkelement 38 bildet, was weiter unten im Detail erläutert ist. Das erste Umlenkelement 37 und das zweite Umlenkelement 38 lenken das Beleuchtungslichtbündel 13 nacheinander mit Ablenkwinkeln unterschiedlichen Vorzeichens und unterschiedlicher Beträge um. Das unmittelbar von dem Beleuchtungsobjektiv 1 kommende Beleuchtungslichtbündel 13 wird zuerst mittels des ersten Umlenkelements 37, das als Spiegel ausgebildet ist, derart umgelenkt, dass es sich in einer zur optischen Achse des Beleuchtungsobjektivs 1 senkrechten Ebene ausbreitet. Anschließend wird das Beleuchtungslichtbündel 13 mittels des zweiten Umlenkelements 38, das das Beleuchtungslichtbündel 13 an einem Eintrittsfenster 39 bricht, zu der Grenzfläche 10 zwischen der Probe 5 und dem optisch transparenten Medium 20 umgelenkt. Bei diesem Ausführungsbeispiel liegt die Probe 5 unmittelbar auf einem Austrittsfenster 40 des zweiten Umlenkelements 38.

Das optisch transparente Medium 20 ist in diesem anschaulichen Beispiel als zweites Umlenkelement 38 des Umlenkmittels 3 ausgebildet. Die Probe 5 befindet sich unmittelbar am Austrittsfenster 40 des zweiten Umlenkelements 38. In der Praxis ist es jedoch von Vorteil, wenn das optisch transparente Medium 20 beispielsweise den Boden eines als Schale ausgebildeten Probenträgers beinhaltet, der beispielsweise mit dem zweiten Umlenkelement 38 unmittelbar in Kontakt stehen kann. Dieser kann auch Teil des Umlenkmittels 3 sein oder alternativ mit dem Verstelltisch des Mikroskops verbunden sein, was jedoch der besseren Übersichtlichkeit halber bei diesem Ausführungsbeispiel außer Acht gelassen ist.

An der Grenzfläche 10 zwischen dem optisch transparenten Medium 20 und der Probe 5 wird das Beleuchtungslichtbündel 13 zur evaneszenten Beleuchtung der Probe 5 totalreflektiert. Das evaneszente Feld 41 ragt in die Probe 5 und führt dort zu einer optischen Anregung von Fluoreszenzfarbstoffen.

Das von der Probe 5 ausgehende Fluoreszenzlicht gelangt durch das Detektionsobjektiv 2 hindurch und wird von einer weiteren Tubuslinse 42 auf die aktive Fläche eines Detektors 43 fokussiert, der als Kamera 44 ausgebildet ist.

Die Strahlablenkeinrichtung 32 weist einen kardanisch aufgehängten Spiegel 45 auf, der es ermöglicht, das Beleuchtungslichtbündel 13 in zwei zueinander senkrechten Ebenen mit jeweils beliebigem Ablenkwinkel ablenken zu können. Auf diese Weise können die räumliche Lage und die Ausbreitungsrichtung des aus dem Beleuchtungsobjektiv 1 austretenden Beleuchtungslichtbündels 13 weitgehend frei eingestellt werden. Auf diese Weise ist es beispielsweise möglich, das Beleuchtungslichtbündel 13 statt auf das erste Umlenkelement 37 auf ein drittes, dem ersten Umlenkelement 37 gegenüberliegendes, Umlenkelement 46 zu lenken, um die Grenzfläche 10 aus einer anderen Richtung zu beleuchten. Durch Einstellen der räumlichen Position und der Ausbreitungsrichtung des Beleuchtungslichtbündels 13 mittels der Strahlablenkeinrichtung 32 können der Auftreffort und/oder der Einfallswinkel und/oder die Einfallsrichtung des Beleuchtungslichtbündels 13 auf die Grenzfläche 10 eingestellt werden.

Alternativ zu einem kardanisch aufgehängten Spiegel 45 könnte die Strahlablenkeinrichtung 32 beispielsweise auch mindestens zwei optisch in Reihe geschaltete Ablenkelemente, insbesondere Ablenkspiegel, aufweisen, die das Beleuchtungslichtbündel 13 in zueinander senkrechten Ablenkebenen ablenken können.

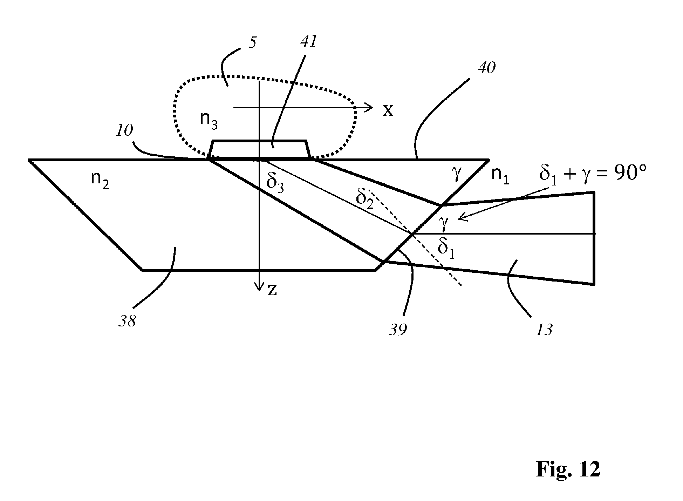

Fig. 12 zeigt eine Detailansicht des zweiten Umlenkelements 38 des neunten Ausführungsbeispiels, wobei in die Figur einige relevante Winkel eingezeichnet sind.

Das zweite Umlenkelement 38 ist als transparenter Block, insbesondere als Glasblock, ausgebildet und weist ein ebenes Eintrittsfenster 39 für das Beleuchtungslichtbündel sowie ein ebenes Austrittsfenster 40 auf, wobei das Eintrittsfenster 39 und das Austrittsfenster 40 einen Winkel γ zueinander aufweisen, der kleiner als 90 Grad ist. Eine solche Ausführung hat den besonderen Vorteil, dass ein Probenträger, der insbesondere als Schale ausgebildet sein kann, in einer Untersuchungsposition auf dem Austrittsfenster 40 abgestellt werden kann, so dass die Grenzfläche zwischen der Probe und dem Probenträger durch das zweite Umlenkelement und durch den Boden der darauf abgestellten Schale hindurch mit dem Beleuchtungslichtbündel beleuchtet werden kann.

In dem dargestellten Beispiel steht - der besseren Anschaulichkeit halber - eine Probe 5 unmittelbar mit dem Austrittsfenster 40 in Kontakt. An der Grenzfläche 10 zwischen dem Austrittsfenster 40 und der Probe 5 wird das Beleuchtungslichtbündel 13 totalreflektiert, so dass ein evaneszentes Feld 41 in die Probe 5 ragt.

Das zweite Umlenkelement 38 weist einen Brechungsindex n2 auf und steht an seinem Austrittsfenster 40 mit der Probe 5 in Kontakt, die einen Brechungsindex n3 aufweist. Das Beleuchtungslichtbündel 13 trifft aus einem Medium mit dem Brechungsindex n1 kommend auf das Eintrittsfenster 39, wobei der Einfallswinkel des Beleuchtungslichtbündels auf das Eintrittsfenster $\delta 1$ beträgt. Hierbei gelten folgende Beziehungen:

$$\delta_3 = \delta_2 + \gamma$$

$$\delta_2 = \arcsin(n_1 \cos\gamma / n_2)$$

$$\sin\delta_3 > n_3/n_2$$

$$\sin(\delta_2 + \gamma) > n_3/n_2$$

$$\sin(\arcsin(n_1 \cos\gamma / n_2) + \gamma) > n_3/n_2$$

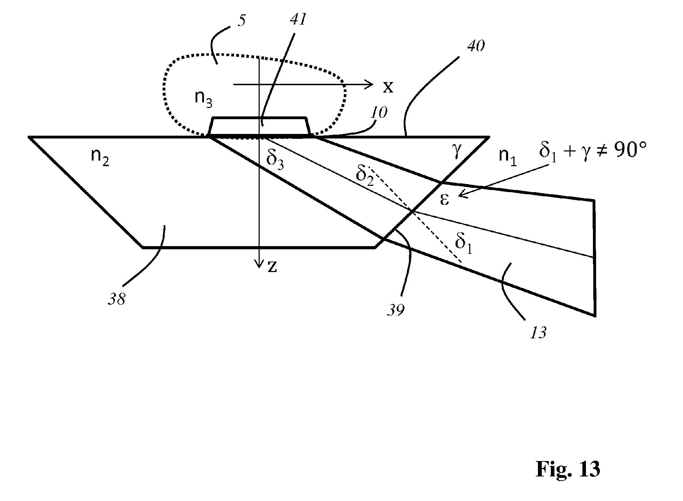

Fig. 13 zeigt eine Detailansicht eines alternativen Strahlverlaufs im Bereich des Umlenkelements, bei der sich das Beleuchtungslichtbündel 13 nach einer ersten Umlenkung nicht in einer zur optischen Achse des Beleuchtungsobjektivs 1 senkrechten Ebene ausbreitet, so dass gilt:

$$\delta_1 + \gamma \neq 90°.$$

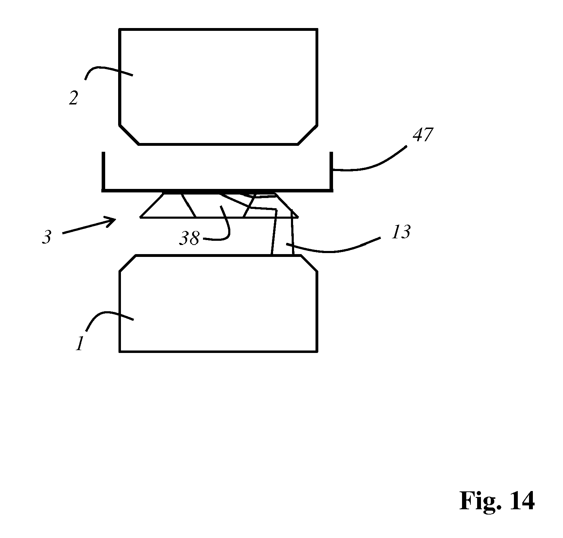

Fig. 14 zeigt eine Detailansicht eines zehnten Ausführungsbeispiels einer erfindungsgemäßen Vorrichtung, bei dem als Teil des Umlenkmittels 20 eine Petrischale mit Glasboden 47 auf dem zweiten Umlenkelement 38 für eine Probe 5 (in dieser Figur nicht eingezeichnet) abgestellt ist.

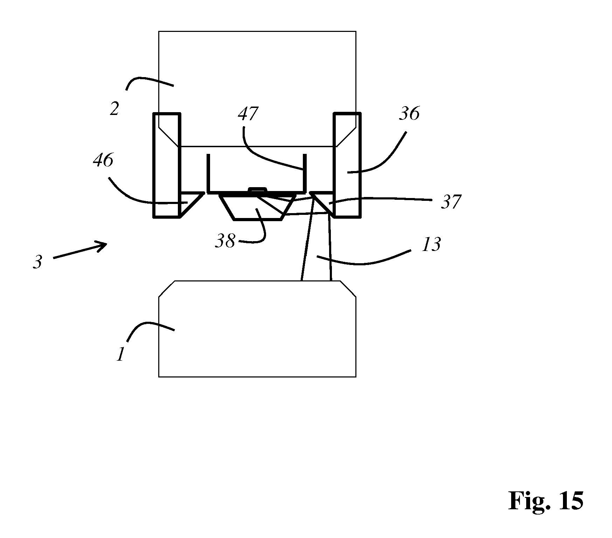

Fig. 15 zeigt die Detailansicht eines elften Ausführungsbeispiels einer erfindungsgemäßen Vorrichtung, bei dem Teil des Umlenkmittels 20 eine Petrischale 47 auf dem zweiten Umlenkelement 38 für eine Probe 5 (in dieser Figur nicht eingezeichnet) abgestellt ist und bei dem das Umlenkmittel 3 an dem Detektionsobjektiv 2 befestigt ist.

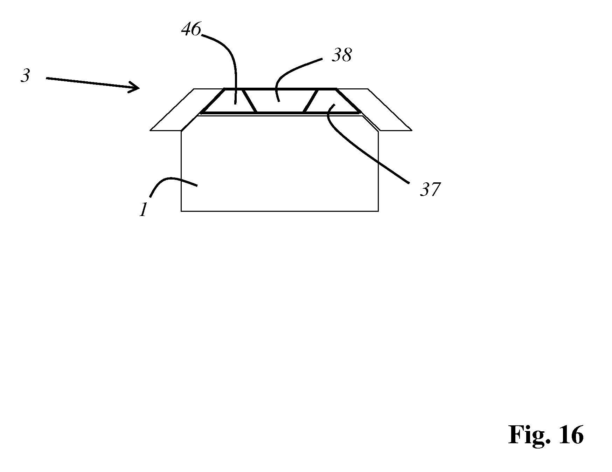

Fig. 16 zeigt eine Detailansicht eines vierten Ausführungsbeispiels einer erfindungsgemäßen Vorrichtung, bei dem das Umlenkmittel 3 an dem Beleuchtungsobjektiv 1 in Form einer Kappe befestigt ist.

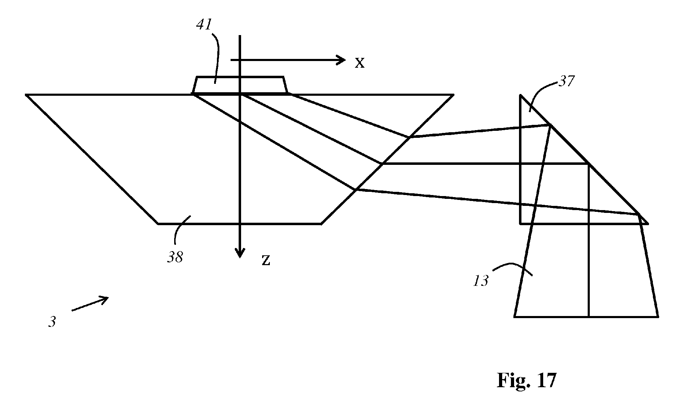

Fig. 17 zeigt eine Detailansicht eines Ausführungsbeispiels eines Umlenkmittels 20 einer erfindungsgemäßen Vorrichtung. Das Umlenkmittel 3 weist ein erstes Umlenkelement 37 und ein zweites Umlenkelement 38 auf. Das zweite Umlenkelement 38 ist als Prisma ausgebildet, an dessen Hypothenusenfläche das Beleuchtungslichtbündel 13 zu dem zweiten Umlenkelement 38 durch Totalreflexion umgelenkt wird. Das erste Umlenkelement 37 und das zweite Umlenkelement 38 sind durch einen luftgefüllten Zwischenraum voneinander beabstandet.

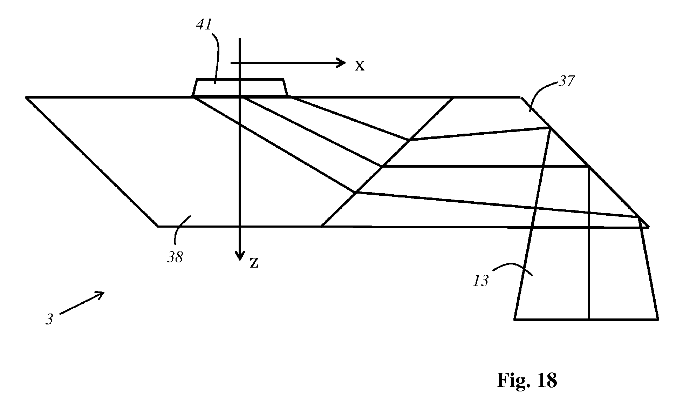

Fig. 18 zeigt eine Detailansicht eines anderen Ausführungsbeispiels eines Umlenkmittels einer erfindungsgemäßen Vorrichtung. Dieses unterscheidet sich von dem in Figur 18 gezeigten Ausführungsbeispiel dadurch, dass das erste Umlenkelement 37 und das zweite Umlenkelement 38 unmittelbar miteinander in Kontakt stehen, was den besonderen Vorteil hat, dass das Umlenkmittel 3 als zusammenhängende Baueinheit gehandhabt und gehaltert werden kann. Darüber hinaus sind Lichtverluste durch Reflexionen und Streuung an Übergangsflächen weitgehend vermieden.

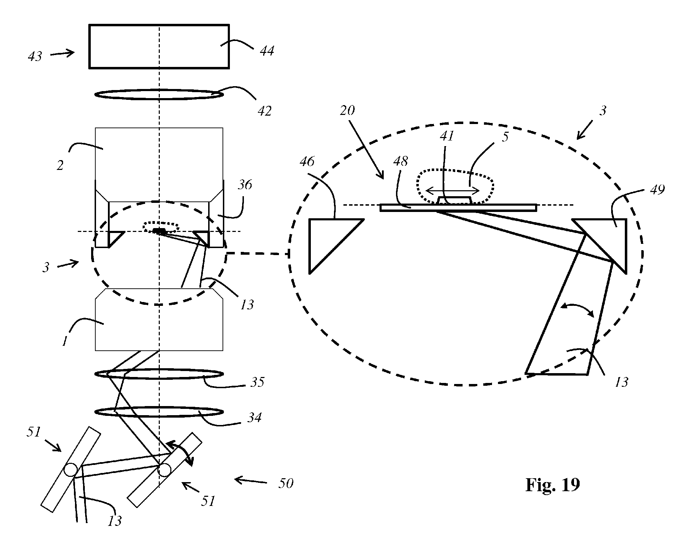

Fig. 19 zeigt ein dreizehntes Ausführungsbeispiel einer erfindungsgemäßen Vorrichtung, das dem in Figur 11 dargestellten neunten Ausführungsbeispiel ähnelt. Allerding ist die Probe auf einem optisch transparenten Medium 20 präpariert, das als dünne planparallele Platte 48, beispielsweise als Deckglas, ausgebildet ist. Der Brechungsindex der dünnen, planparallelen Platte 48 ist größer als der der Probe 5.

Das aus dem Beleuchtungsobjektiv 1 ausgetretene Beleuchtungslichtbündel 13 wird mittels eines Umlenkelements 49 des Umlenkmittels 3 zu der Grenzfläche 41 zwischen der Probe und der dünnen planparallele Platte 48 umgelenkt. Das Umlenkelement 49 ist als Spiegel ausgeführt, dessen ebene Spiegelfläche in einer Ebene angeordnet ist, die einen Winkel von 45 Grad zur optischen Achse des Beleuchtungsobjektivs 1 aufweist.

Zum Verändern des Auftrefffortes und/oder des Einfallswinkels und/oder der Einfallsrichtung dient eine Einstellvorrichtung 50, die zwei jeweils hinsichtlich des Ablenkwinkels einstellbare Strahlablenkeinrichtungen 51 aufweist. Beispielsweise kann jeder der einstellbaren Strahlablenkeinrichtungen 51 einen drehbar und/oder kardanisch aufgehängten Spiegel beinhalten. Das Beleuchtungslichtbündel 13 wird mittels der Einstellvorrichtung 50 so gelenkt, dass es bei Austritt aus dem Beleuchtungsobjektiv 1 gegen die optische Achse des Beleuchtungsobjektivs 1 verkippt ist, also einen von Null Grad verschiedenen Winkel zur optischen Achse aufweist. Diese Verkippung wird derart eingestellt, dass das Beleuchtungslichtbündel 13 nach einer Reflexion an dem Umlenkmittel 49 unter einem Winkel auf die planparallele Platte 48 trifft, so dass an der der Probe 5 zugewandten Grenzfläche im Bereich der Probe 41 Totalreflexion stattfindet und sich ein in die Probe 5 reichendes evaneszentes Feld 41 ausbildet. Der Bereich des evaneszenten Feldes 41 kann dabei durch parallelen Versatz, der mittels der Einstellvorrichtung 50 eingestellt werden kann, verändert werden. Der Auftreffwinkel kann durch eine Veränderung der Verkippung des Beleuchtungslichtbündels 13 mittels der Einstellvorrichtung 50 eingestellt werden.

**Bezugszeichenliste:**

| | |
|---|---|
| 1 | Beleuchtungsobjektiv |
| 2 | Detektionsobjektiv |
| 3 | Umlenkmittel |
| 4 | Kegelstumpfförmige Spiegelfläche |
| 5 | Probe |
| 6 | Erstes Deckglas |
| 7 | Zweites Deckglas |
| 8 | wässriges Nährmedium |
| 9 | Dichtung |
| 10 | Grenzfläche |
| 11 | Immersionsöl |
| 12 | Transparentes optisches Medium |
| 13 | Beleuchtungslichtbündel |
| 14 | Detektionslicht |
| 15 | Verspiegelte Fläche |
| 16 | Außenfläche |
| 17 | Behältnis |
| 18 | Erstes Umlenkmittel |
| 19 | Weiteres Umlenkmittel |
| 20 | Optisch transparentes Medium |
| 21 | Verspiegelte Fläche |
| 22 | Außenfläche |
| 23 | Zweite Spiegelfläche |
| 24 | Befestigungseinrichtung |
| 25 | Auftrefffläche |
| 26 | große Halbachse |
| 27 | kleine Halbachse |
| 28 | Auftreffort |
| 29 | Facettenspiegel |
| 30 | Facetten |
| 31 | kegelstupfförmiger Spiegel |
| 32 | einstellbare Strahlablenkeinrichtung |
| 33 | ebener Spiegel |
| 34 | Scanlinse |
| 35 | Tubuslinse |
| 36 | Halteelement |
| 37 | erstes Umlenkelement |
| 38 | zweites Umlenkelement |
| 39 | Eintrittsfenster |
| 40 | Austrittsfenster |
| 41 | evaneszentes Feld |
| 42 | weitere Tubuslinse |
| 43 | Detektor |
| 44 | Kamera |
| 45 | kardanisch aufgehängter Spiegel |
| 46 | drittes Umlenkelement |
| 47 | Petrischale |
| 48 | planparallele Platte |
| 49 | Umlenkelement |
| 50 | Einstellvorrichtung |
| 51 | einstellbare Strahlablenkeinrichtung |

**Patentansprüche**

1. Verfahren zum mikroskopischen Untersuchen einer Probe (5), **gekennzeichnet durch** folgende Schritte:

   a. In-Kontakt-bringen der Probe (5) mit einem optisch transparenten Medium (12, 20), das einen höheren Brechungsindex aufweist als die Probe (5),
   b. Positionieren einer Probe (5) räumlich zwischen einem Beleuchtungsobjektiv (1) und einem Detektionsobjektiv (2),
   c. Erzeugen eines Beleuchtungslichtbündels (13),
   d. Lenken des Beleuchtungslichtbündels (13) **durch** das Beleuchtungsobjektiv (1), das das Beleuchtungslichtbündel (13) fokussiert,
   e. Umlenken des Beleuchtungslichtbündels (13), das das Beleuchtungsobjektiv (1) durchlaufen hat, in Richtung auf die zu untersuchende Probe (5) mit einem Umlenkmittel (3), derart dass das Beleuchtungslichtbündel (13) auf eine Grenzfläche (10) zwischen dem optisch transparenten Medium (12, 20) und der Probe (5) trifft und dort zur evaneszenten Beleuchtung der Probe (5) totalreflektiert wird,
   f. Detektieren des von der Probe (5) ausgehenden und **durch** das Detektionsobjektiv (2) verlaufenden Fluoreszenzlichtes.

2. Verfahren nach Anspruch 1, **dadurch gekennzeichnet, dass** das Beleuchtungslichtbündel (13) mit dem Umlenkmittel (3) derart umgelenkt wird, dass das umgelenkte Beleuchtungslichtbündel (13) auf die dem Beleuchtungsobjektiv (1) zugewandte Seite der Grenzfläche (10) trifft.

3. Verfahren nach Anspruch 1 oder 2, **dadurch ge-**

**kennzeichnet, dass**

  a. die Grenzfläche (10) zwischen der Probe (5) und dem optisch transparenten Medium (12) unter einem von Null Grad verschiedenen Winkel zur optischen Achse des Beleuchtungsobjektivs (1) und/oder des Detektionsobjektivs (2) ausgerichtet wird, oder dass
  b. die Grenzfläche (10) zwischen der Probe (5) und dem optisch transparenten Medium (12, 20) senkrecht zur optischen Achse des Beleuchtungsobjektivs (1) und/oder des Detektionsobjektivs (2) ausgerichtet wird.

4. Verfahren nach einem der Ansprüche 1 bis 3, **dadurch gekennzeichnet, dass** das Umlenkmittel (3) oder wenigstens eines von mehreren Umlenkelementen (37, 38) des Umlenkmittels (3) an dem Detektionsobjektiv (2) angeordnet und/oder befestigt ist.

5. Verfahren nach einem der Ansprüche 1 bis 4, **dadurch gekennzeichnet, dass**

  a. das optisch transparente Medium (12, 20) als Probenträger oder als Boden eines als Schale ausgebildeten Probenträgers ausgebildet ist, und/oder dass
  b. das optisch transparente Medium (12, 20) unmittelbar mit dem Umlenkmittel (3) oder einem Umlenkelement (37, 38) des Umlenkmittels (3) in Kontakt steht, und/oder dass
  c. das optisch transparente Medium (12, 20) über eine Immersionsschicht, insbesondere bestehend aus einer Immersionsflüssigkeit, mit dem Umlenkmittel (3) oder einem Umlenkelement (37, 38) des Umlenkmittels (3) in Kontakt steht, und/oder dass
  d. das transparente optische Medium (12, 20) das Umlenkmittel (3, 18) ist oder Teil des Umlenkmittels (3, 18) ist.

6. Verfahren nach einem der Ansprüche 1 bis 5, **dadurch gekennzeichnet, dass**

  a. das Beleuchtungslichtbündel (13) nach dem Umlenken in einer Ebene verläuft, die einen von Null Grad verschiedenen Winkel zur optischen Achse des Beleuchtungsobjektivs (1) aufweist, und/oder dass
  b. das Beleuchtungslichtbündel (13) derart abgelenkt wird, dass es unter einem Einfallswinkel im Bereich von 55 bis 70 Grad auf die Grenzfläche (10) zwischen der Probe (5) und dem optisch transparenten Medium (12) trifft, und/oder dass
  c. das Beleuchtungslichtbündel (13) derart abgelenkt wird, dass es unter einem Einfallswinkel im Bereich von 60 bis 64 Grad auf die Grenzfläche (10) zwischen der Probe (5) und dem optisch transparenten Medium (12) trifft.

7. Verfahren nach einem der Ansprüche 1 bis 6, **dadurch gekennzeichnet, dass**

  a. das Umlenken mehrere Einzelumlenkungen beinhaltet, und/oder dass
  b. das Umlenken mehrere aufeinanderfolgende Einzelumlenkungen mit Ablenkwinkeln unterschiedlicher Vorzeichen beinhaltet.

8. Verfahren nach einem der Ansprüche 1 bis 7, **dadurch gekennzeichnet, dass** das Umlenkmittel (3) ein erstes Umlenkelement (37) und ein zweites Umlenkelement (38) aufweist, wobei

  a. das erste Umlenkelement (37) und das zweite Umlenkelement (38) das Beleuchtungslichtbündel (13) nacheinander umlenken, und/oder wobei
  b. das erste Umlenkelement (37) und das zweite Umlenkelement (38) das Beleuchtungslichtbündel (13) nacheinander mit Ablenkwinkeln unterschiedlichen Vorzeichens umlenken, und/oder wobei
  c. das erste Umlenkelement (37) und das zweite Umlenkelement (38) das Beleuchtungslichtbündel (13) nacheinander mit Winkeln unterschiedlicher Beträge umlenken und/oder wobei
  d. das erste Umlenkelement (37) das Beleuchtungslichtbündel (13) mit einem ersten Umlenkwinkel umlenkt und das zweite Umlenkelement (38) das Beleuchtungslichtbündel (13) mit einem zweiten Umlenkwinkel, dessen Betrag kleiner als der Betrag des ersten Umlenkwinkels ist, umlenkt, und/oder wobei
  e. das unmittelbar von dem Beleuchtungsobjektiv (1) kommende Beleuchtungslichtbündel (13) zuerst mittels des ersten Umlenkelements (37) derart umgelenkt wird, dass es sich in einer zur optischen Achse des Beleuchtungsobjektivs (1) senkrechten Ebene ausbreitet und es anschließend mittels des zweiten Umlenkelements (38) zu der Grenzfläche (10) umgelenkt wird.

9. Verfahren nach Anspruch 8, **dadurch gekennzeichnet, dass**

  a. das zweite Umlenkelement (38) als transparenter Block, insbesondere als Glasblock, ausgebildet ist, oder dass
  b. das zweite Umlenkelement (38) ein ebenes Eintrittsfenster (39) für das Beleuchtungslichtbündel (13) und ein ebenes Austrittsfenster (40) aufweist, wobei das Eintrittsfenster (39) und das Austrittsfenster (40) einen Winkel γ zueinander aufweisen, der kleiner als 90 Grad ist

10. Verfahren nach einem der Ansprüche 1 bis 9, **dadurch gekennzeichnet, dass**

a. der Auftreffort (28) und/oder der Einfallswinkel und/oder die Einfallsrichtung des Beleuchtungslichtbündels (13) auf die Grenzfläche (10) zwischen der Probe (5) und dem optisch transparenten Medium (12) verändert wird, und/oder dass
b. der Auftreffort (28) des Beleuchtungslichtbündels (13) auf die Grenzfläche (10) zwischen der Probe (5) und dem optisch transparenten Medium (12) kontinuierlich entlang einer Scanbahn verändert wird, und/oder dass
c. der Auftreffort (28) und/oder der Einfallswinkel und/oder die Einfallsrichtung des Beleuchtungslichtbündels (13) auf die Grenzfläche (10) zwischen der Probe (5) und dem optisch transparenten Medium (12) mittels einer auf das Beleuchtungslichtbündel (13) wirkenden, hinsichtlich des Ablenkwinkels einstellbaren Strahlablenkeinrichtung verändert wird, und/oder dass
d. der Auftreffort (28) und/oder der Einfallswinkel und/oder die Einfallsrichtung des Beleuchtungslichtbündels (13) auf die Grenzfläche (10) zwischen der Probe (5) und dem optisch transparenten Medium (12) durch Bewegen der Probe (5) relativ zu dem Beleuchtungsobjektiv (1) verändert wird, und/oder dass
e. der Auftreffort (28) und/oder der Einfallswinkel und/oder die Einfallsrichtung des Beleuchtungslichtbündels (13) auf die Grenzfläche (10) zwischen der Probe (5) und dem optisch transparenten Medium (12) durch Bewegen des Umlenkmittels verändert wird und/oder dass
f. das Umlenkmittel (3) als Spiegel mit mehreren Facetten ausgebildet ist und der Auftreffort (28) und/oder der Einfallswinkel und/oder die Einfallsrichtung des Beleuchtungslichtbündels (13) auf die Grenzfläche (10) zwischen der Probe (5) und dem optisch transparenten Medium (12) dadurch verändert werden, dass nacheinander unterschiedliche Facetten beleuchtet werden,
g. die Beleuchtungsfleckgröße des Beleuchtungslichtbündels (13) auf der Grenzfläche (10) zwischen der Probe (5) und dem optisch transparenten Medium (12, 20) durch Einschwenken einer Linse in den dem Beleuchtungsobjektiv (1) vorgelagerten Teil des Strahlenganges des Beleuchtungslichtbündels (13) verändert wird, und/oder dass
h. die Beleuchtungsfleckgröße des Beleuchtungslichtbündels (13) auf der Grenzfläche (10) zwischen der Probe (5) und dem optisch transparenten Medium (12, 20) durch Verschieben des Beleuchtungsobjektivs (1) entlang der optischen Achse verändert wird, und/oder dass
i. die Beleuchtungsfleckgröße des Beleuchtungslichtbündels (13) auf der Grenzfläche (10) zwischen der Probe (5) und dem optisch transparenten Medium (12, 20) durch Verkippen einer im Strahlengang des Beleuchtungslichtbündels (13) angeordneten, insbesondere planparallelen, transparenten Platte, verändert wird.

11. Verfahren nach Anspruch 10, **dadurch gekennzeichnet, dass**

a. jedem Auftreffort (28) ein Probenbereich zugeordnet wird, und/oder dass
b. für jeden Auftreffort (28) unter Berücksichtigung des Einfallswinkels und/oder des Brechungsindex der Probe (5) und/oder des Brechungsindex des optisch transparenten Mediums (12) und/oder der Wellenlänge des Beleuchtungslichtbündels (13) und/oder dem Durchmesser des Auftreffortes (28) ein Probenbereich ermittelt wird.

12. Verfahren nach Anspruch 10 oder11, **dadurch gekennzeichnet, dass** jedem Auftreffort (28) und/oder jedem zugeordneten Probenbereich jeweils eine Abbildung zugeordnet wird, die durch Detektion des während der Beleuchtung des jeweiligen Auftreffortes (28) von der Probe (5) ausgehenden Detektionslichts gewonnen wurde.

13. Verfahren nach einem der Ansprüche 1 bis 12, **dadurch gekennzeichnet, dass** jeweils derselbe Auftreffort (28) zeitlich nacheinander aus unterschiedlichen Richtungen beleuchtet wird.

14. Verfahren nach einem der Ansprüche 1 bis 13, **dadurch gekennzeichnet, dass** das Beleuchtungslichtbündel (13) im Querschnitt kreisrund ist oder dass das Beleuchtungslichtbündel (13) im Querschnitt elliptisch ist oder dass das Beleuchtungslichtbündel (13) die Form eines Lichtstreifens oder Quasi-Lichtstreifens aufweist.

15. Verfahren nach einem der Ansprüche 1 bis 14, **dadurch gekennzeichnet, dass** die optische Achse des Beleuchtungsobjektivs (1) und die optische Achse des Detektionsobjektivs (2) zueinander parallel oder koaxial ausgerichtet sind und/oder dass das Detektionsobjektiv (2) und das Beleuchtungsobjektiv (1) einander entgegengesetzt und einander gegenüberliegend ausgerichtet sind.

16. Verfahren nach einem der Ansprüche 1 bis 15, **dadurch gekennzeichnet, dass**

a. dieselbe Probe (5) einer weiteren Untersuchung unterzogen wird, bei der ihre Beleuchtung mit dem Beleuchtungslichtbündel (13) direkt und ohne Totalreflexion an der Grenzfläche (10) erfolgt, und/oder dass

b. dieselbe Probe (5) einer weiteren Untersuchung unterzogen wird, bei der ihre Beleuchtung für eine SPIM-Untersuchung (Single Plane Illumination Microscopy) mit dem Beleuchtungslichtbündel (13) direkt und ohne Totalreflexion an der Grenzfläche (10) erfolgt, und/oder dass

c. dieselbe Probe (5) einer weiteren Untersuchung unterzogen wird, bei der ihre Beleuchtung mit dem zu einem Lichtstreifen oder Quasi-Lichtstreifen geformten Beleuchtungslichtbündel (13) direkt und ohne Totalreflexion an der Grenzfläche (10) erfolgt.

17. Verfahren nach Anspruch 16, **dadurch gekennzeichnet, dass** das Beleuchtungslichtbündel (13), nachdem es das Beleuchtungsobjektiv (1) durchlaufen hat, für die weitere Untersuchung mittels eines weiteren, an dem Detektionsobjektiv (2) angeordneten Umlenkmittel zur Probe (5) umgelenkt wird.

18. Verfahren nach einem der Ansprüche 1 bis 17, **dadurch gekennzeichnet, dass**

a. das Beleuchtungslichtbündel (13) derart, insbesondere in einem von Null Grad verschiedenen Winkel zur optischen Achse, in das Beleuchtungsobjektiv (1) eingekoppelt wird, dass es außermittig aus der Frontlinse des Beleuchtungsobjektivs (1) austritt, und/oder dass

b. das Beleuchtungslichtbündel (13) derart, insbesondere in einem von Null Grad verschiedenen Winkel zur optischen Achse, in das Beleuchtungsobjektiv (1) eingekoppelt wird, dass es in einem von Null Grad verschiedenen Winkel zur optischen Achse aus der Frontlinse des Beleuchtungsobjektivs (1) austritt.

19. Verfahren nach einem der Ansprüche 1 bis 18, **dadurch gekennzeichnet, dass**

a. die Lichtleistung des an der Grenzfläche (10) totalreflektierten Beleuchtungslichtbündels (13) gemessen wird, und/oder dass

b. das an der Grenzfläche totalreflektierte Beleuchtungslichtbündel (13) zu einem weiteren Detektor gelenkt wird, und/oder dass

c. das an der Grenzfläche totalreflektierte Beleuchtungslichtbündel (13) bei der Erzeugung einer überaufgelösten Abbildung der Probe (5) verwendet wird, und/oder dass

d. das an der Grenzfläche totalreflektierte Beleuchtungslichtbündel (13) zurück zu dem Beleuchtungsobjektiv (1) umgelenkt wird und durch das Beleuchtungsobjektiv (1) verläuft, und/oder dass

e. das an der Grenzfläche totalreflektierte Beleuchtungslichtbündel (13) mittels des, insbesondere einen kegelstumpfförmigen Spiegel oder ein hexagonales Umlenkelement aufweisenden, Umlenkmittels (3) zurück zu dem Beleuchtungsobjektiv (1) umgelenkt wird und durch das Beleuchtungsobjektiv (1) verläuft, und/oder dass

f. das Umlenkmittel (3) wenigstens zwei einander gegenüberliegende Umlenkelemente aufweist, von denen eines das von dem Beleuchtungsobjektiv (1) kommende Beleuchtungslichtbündel (13) umlenkt und das andere das an der Grenzfläche totalreflektierte Beleuchtungslichtbündel (13) umlenkt, und/oder dass

g. das Umlenkmittel (3) mehrere jeweils paarweise einander gegenüberliegende Umlenkelemente aufweist, von denen jeweils eines das von dem Beleuchtungsobjektiv (1) kommende Beleuchtungslichtbündel (13) umlenkt und das jeweils andere das an der Grenzfläche totalreflektierte Beleuchtungslichtbündel (13) umlenkt.

20. Vorrichtung zur Ausführung eines Verfahrens nach einem der Ansprüche 1 bis 19, mit einem Beleuchtungsobjektiv (1) und einem Detektionsobjektiv (2), an dem ein Umlenkmittel (3) zum Umlenken eines Beleuchtungslichtbündels (13) auf eine Grenzfläche (10) zwischen einem optisch transparenten Medium (12) und einer Probe (5) angeordnet ist.

21. Vorrichtung zum mikroskopischen Untersuchen einer Probe, wobei die Vorrichtung aufweist:

a. ein Beleuchtungsobjektiv und ein Detektionsobjektiv, zwischen denen eine zu untersuchende Probe, die mit einem optisch transparenten Medium in Kontakt steht, das einen höheren Brechungsindex aufweist als die Probe, positionierbar ist,

b. einer Lichtquelle, die ein Beleuchtungslichtbündel (13) erzeugt, das das Beleuchtungsobjektiv fokussiert,

c. ein Umlenkmittel (3), das das Beleuchtungslichtbündel (13), nach dem es das Beleuchtungsobjektiv durchlaufen hat, derart umlenkt, dass das Beleuchtungslichtbündel (13) auf eine Grenzfläche (10) zwischen dem optisch transparenten Medium und der Probe trifft und dort zur evaneszenten Beleuchtung der Probe totalreflektiert wird,

d. einen Detektor zum Detektieren des von der Probe (5) ausgehenden und durch das Detektionsobjektiv (2) verlaufenden Fluoreszenzlichtes.

22. Vorrichtung nach Anspruch 20 oder 21, **dadurch ge-**

**kennzeichnet, dass**

a. die Grenzfläche (10) zwischen der Probe (5) und dem optisch transparenten Medium (12) einen von Null Grad verschiedenen Winkel zur optischen Achse des Beleuchtungsobjektivs (1) und/oder des Detektionsobjektivs (2) aufweist, oder dass

b. die Grenzfläche (10) zwischen der Probe (5) und dem optisch transparenten Medium (12) senkrecht zur optischen Achse des Beleuchtungsobjektivs (1) und/oder des Detektionsobjektivs (2) ausgerichtet ist, und/oder dass

c. das Umlenkmittel (3) das Beleuchtungslichtbündel (13) derart umlenkt, dass das umgelenkte Beleuchtungslichtbündel (13) auf die dem Beleuchtungsobjektiv zugewandte Seite der Grenzfläche (10) trifft.

23. Vorrichtung nach Anspruch 22, **dadurch gekennzeichnet, dass**

a. das optisch transparente Medium als Probenträger oder als Boden eines als Schale ausgebildeten Probenträgers ausgebildet ist, und/oder dass

b. das optisch transparente Medium unmittelbar mit dem Umlenkmittel (3) oder einem Umlenkelement des Umlenkmittels (3) in Kontakt steht, und/oder dass

c. das optisch transparente Medium über eine Immersionsschicht, insbesondere bestehend aus einer Immersionsflüssigkeit, mit dem Umlenkmittel (3) oder einem Umlenkelement des Umlenkmittels (3) in Kontakt steht, und/oder dass

d. das transparente optische Medium (12) das Umlenkmittel (3, 18) ist oder Teil des Umlenkmittels (3, 18) ist.

24. Vorrichtung nach einem der Ansprüche 20 bis 23, **dadurch gekennzeichnet, dass**

a. das Beleuchtungslichtbündel (13) nach dem Umlenken in einer Ebene verläuft, die einen von Null Grad verschiedenen Winkel zur optischen Achse des Beleuchtungsobjektivs (1) aufweist, und/oder dass

b. das Umlenkmittel (3) das Beleuchtungslichtbündel (13) derart abgelenkt, dass es unter einem Einfallswinkel auf die Grenzfläche (10) zwischen der Probe (5) und dem optisch transparenten Medium (12) trifft, der größer ist, als der Grenzwinkel der Totalreflexion, und/oder dass

c. das Umlenkmittel (3) das Beleuchtungslichtbündel (13) derart abgelenkt, dass es unter einem Einfallswinkel im Bereich von 55 bis 70 Grad auf die Grenzfläche (10) zwischen der Probe (5) und dem optisch transparenten Medium (12) trifft, und/oder dass

d. das Umlenkmittel (3) das Beleuchtungslichtbündel (13) derart abgelenkt, dass es unter einem Einfallswinkel im Bereich von 60 bis 64 Grad auf die Grenzfläche (10) zwischen der Probe (5) und dem optisch transparenten Medium (12) trifft.

25. Vorrichtung nach einem der Ansprüche 20 bis 24, **dadurch gekennzeichnet, dass** das Umlenkmittel (3) wenigstens ein erstes Umlenkelement und ein zweites Umlenkelement aufweist, wobei

a. das erste Umlenkelement und das zweite Umlenkelement das Beleuchtungslichtbündel (13) nacheinander umlenken, und/oder wobei

b. das erste Umlenkelement und das zweite Umlenkelement das Beleuchtungslichtbündel (13) nacheinander mit Ablenkwinkeln unterschiedlichen Vorzeichens umlenken, und/oder wobei

c. das erste Umlenkelement und das zweite Umlenkelement das Beleuchtungslichtbündel (13) nacheinander mit unterschiedlichen Winkeln und unterschiedlichen Beträgen umlenken und/oder wobei

d. das erste Umlenkelement das Beleuchtungslichtbündel (13) mit einem ersten Umlenkwinkel umlenkt und das zweite Umlenkelement das Beleuchtungslichtbündel (13) mit einem zweiten Umlenkwinkel, dessen Betrag kleiner als der Betrag des ersten Umlenkwinkels ist, umlenkt, und/oder wobei

e. das unmittelbar von dem Beleuchtungsobjektiv kommende Beleuchtungslichtbündel (13) zuerst mittels des ersten Umlenkelements derart umgelenkt wird, dass es sich in einer zur optischen Achse des Beleuchtungsobjektivs senkrechten Ebene ausbreitet und es anschließend mittels des zweiten Umlenkelements zu der Grenzfläche (10) umgelenkt wird.

26. Vorrichtung nach einem der Ansprüche 20 bis 25, **dadurch gekennzeichnet, dass**

a. das Umlenkmittel (3, 18) einen Block aus transparentem Material, insbesondere ein Prisma, aufweist, und/oder dass

b. das Umlenkmittel (3, 18), insbesondere unmittelbar, an eine Frontlinse des Detektionsobjektivs (2), angekoppelt ist oder dass das Umlenkmittel eine Frontlinse des Detektionsobjektivs (2) beinhaltet, und/oder dass

c. das Umlenkmittel (3, 18) einen Block aus transparentem Material aufweist, wobei wenigstens eine Außenfläche des Blocks als Spiegel ausgebildet ist, und/oder dass

d. das Umlenkmittel (3, 18) einen Block aus transparentem Material aufweist, wobei eine Außenfläche als Einkoppelfenster für das Beleuchtungslichtbündel (13) ausgebildet und angeordnet ist, und/oder dass das zweite Umlenkelement als transparenter Block, insbesondere als Glasblock, ausgebildet ist, oder dass

e. das zweite Umlenkelement ein ebenes Eintrittsfenster für das Beleuchtungslicht und ein ebenes Austrittsfenster aufweist, wobei das Eintrittsfenster und das Austrittsfenster einen Winkel γ zueinander aufweisen, der kleiner als 90 Grad ist.

27. Vorrichtung nach einem der Ansprüche 20 bis 26, **dadurch gekennzeichnet, dass**

a. der Auftreffort (28) und/oder der Einfallswinkel und/oder die Einfallsrichtung und/oder die Beleuchtungsfleckgröße des Beleuchtungslichtbündels (13) auf die Grenzfläche (10) zwischen der Probe (5) und dem optisch transparenten Medium (12, 20) einstellbar ist, und/oder dass

b. der Auftreffort (28) des Beleuchtungslichtbündels (13) auf die Grenzfläche (10) zwischen der Probe (5) und dem optisch transparenten Medium (12, 20) kontinuierlich entlang einer Scanbahn einstellbar ist, und/oder dass

c. der Auftreffort (28) und/oder der Einfallswinkel und/oder die Einfallsrichtung und/oder die Beleuchtungsfleckgröße des Beleuchtungslichtbündels (13) auf die Grenzfläche (10) zwischen der Probe (5) und dem optisch transparenten Medium (12, 20) mittels einer auf das Beleuchtungslichtbündel (13) wirkenden, hinsichtlich des Ablenkwinkels einstellbaren Strahlablenkeinrichtung einstellbar ist, und/oder dass

d. der Auftreffort (28) und/oder der Einfallswinkel und/oder die Einfallsrichtung und/oder die Beleuchtungsfleckgröße des Beleuchtungslichtbündels (13) auf die Grenzfläche (10) zwischen der Probe (5) und dem optisch transparenten Medium (12, 20) durch Bewegen der Probe (5) samt dem optisch transparenten Medium (12, 20) relativ zu dem Beleuchtungsobjektiv (1) einstellbar ist, und/oder dass

e. der Auftreffort (28) und/oder der Einfallswinkel und/oder die Einfallsrichtung und/oder die Beleuchtungsfleckgröße des Beleuchtungslichtbündels (13) auf die Grenzfläche (10) zwischen der Probe (5) und dem optisch transparenten Medium (12, 20) durch Bewegen des Umlenkmittels (3) samt dem optisch transparenten Medium (12, 20) einstellbar ist und/oder dass

f. das Umlenkmittel (3) als Spiegel mit mehreren Facetten ausgebildet ist und der Auftreffort (28) und/oder der Einfallswinkel und/oder die Einfallsrichtung des Beleuchtungslichtbündels (13) auf die Grenzfläche (10) zwischen der Probe (5) und dem optisch transparenten Medium (12, 20) dadurch veränderbar ist, dass nacheinander unterschiedliche Facetten beleuchtet werden, und/oder dass

g. die Beleuchtungsfleckgröße des Beleuchtungslichtbündels (13) auf die Grenzfläche (10) zwischen der Probe (5) und dem optisch transparenten Medium (12, 20) durch Einschwenken einer Linse in den dem Beleuchtungsobjektiv vorgelagerten Teil des Strahlenganges des Beleuchtungslichtbündels (13) veränderbar ist, und/oder dass

h. die Beleuchtungsfleckgröße des Beleuchtungslichtbündels (13) auf die Grenzfläche (10) zwischen der Probe (5) und dem optisch transparenten Medium (12, 20) durch Verschieben des Beleuchtungsobjektivs entlang der optischen Achse veränderbar ist, und/oder dass

i. eine hinsichtlich des Ablenkwinkels einstellbare Strahlablenkeinrichtung (32) zum Verändern des Auftreffortes (28) und/oder des Einfallswinkels und/oder der Einfallsrichtung des Beleuchtungslichtbündels (13) auf die Grenzfläche (10) vorhanden ist.

28. Vorrichtung nach einem der Ansprüche 20 bis 27, **dadurch gekennzeichnet, dass**

a. die optische Achse des Beleuchtungsobjektivs (1) und die optische Achse des Detektionsobjektivs (2) zueinander parallel oder koaxial ausgerichtet sind und/oder dass

b. das Detektionsobjektiv (2) und das Beleuchtungsobjektiv (1) einander entgegengesetzt und einander gegenüberliegend ausgerichtet sind.

29. Vorrichtung nach einem der Ansprüche 20 bis 28, **dadurch gekennzeichnet, dass**

a. das Beleuchtungslichtbündel (13) außermittig aus dem Beleuchtungsobjektiv (1) austritt, und/oder dass

b. das Beleuchtungslichtbündel (13) außermittig aus der Frontlinse des Beleuchtungsobjektivs (1) austritt, und/oder dass

c. das Beleuchtungsobjektiv eine numerische Apertur aufweist, die kleiner als 0,2, insbesondere kleiner als 0,1 ist, oder insbesondere 0,05 beträgt, und/oder dass

d. das Beleuchtungsobjektiv eine Vergrößerung im Bereich von 2 bis 10, insbesondere im Bereich von 2 bis 5, insbesondere von 2,5 oder 5,0 aufweist, und/oder dass

e. das Beleuchtungsobjektiv und/oder das Detektionsobjektiv ein Wasserobjektiv ist.

**30.** Vorrichtung nach einem der Ansprüche 20 bis 29, **dadurch gekennzeichnet, dass**

a. ein weiterer Detektor vorhanden ist, der das an der Grenzfläche (10) totalreflektierten Beleuchtungslichtbündel (13) detektiert und/oder dass

b. ein weiterer Detektor vorhanden ist, der die Lichtleistung des an der Grenzfläche (10) totalreflektierten Beleuchtungslichtbündels (13) misst, und/oder dass

c. ein weiterer Detektor vorhanden ist, der als Flächendetektor ausgebildet ist, und/oder das

d. eine Auswertevorrichtung vorhanden ist, die aus den gewonnenen Bilddaten eine überaufgelösten Abbildung der Probe (5) errechnet.

e. das an der Grenzfläche (10) totalreflektierte Beleuchtungslichtbündel (13) zurück zu dem Beleuchtungsobjektiv (1) umgelenkt ist und durch das Beleuchtungsobjektiv (1) verläuft, und/oder dass

f. das Umlenkmittel (3) das an der Grenzfläche (10) totalreflektierte Beleuchtungslichtbündel (13) zurück zu dem Beleuchtungsobjektiv (1) umgelenkt wird und dieses anschließend durch das Beleuchtungsobjektiv (1) verläuft, und/oder dass

g. das Umlenkmittel (3) wenigstens zwei einander gegenüberliegende Umlenkelemente aufweist, von denen eines das von dem Beleuchtungsobjektiv kommende Beleuchtungslichtbündel (13) umlenkt und das andere das an der Grenzfläche (10) totalreflektierte Beleuchtungslichtbündel (13) umlenkt, und/oder dass

h. das Umlenkmittel (3) mehrere jeweils paarweise einander gegenüberliegende Umlenkelemente aufweist, von denen jeweils eines das von dem Beleuchtungsobjektiv (1) kommende Beleuchtungslichtbündel (13) umlenkt und das jeweils andere das an der Grenzfläche (10) totalreflektierte Beleuchtungslichtbündel (13) umlenkt.

**31.** Vorrichtung nach einem der Ansprüche 20 bis 30, **dadurch gekennzeichnet, dass**

a. ein weiteres Umlenkmittel (19) für eine weitere Untersuchung, bei der die Beleuchtung der Probe (5) mit dem Beleuchtungslichtbündel (13) direkt und ohne Totalreflexion an der Grenzfläche (10) erfolgt, vorhanden ist, und/oder dass

b. ein weiteres Umlenkmittel (19) für eine weitere Untersuchung, bei der die Beleuchtung der Probe (5) mit dem Beleuchtungslichtbündel (13) direkt und ohne Totalreflexion an der Grenzfläche (10) erfolgt, an dem Detektionsobjektiv (2) angeordnet ist.

**32.** Vorrichtung nach einem der Ansprüche 20 bis 31, **dadurch gekennzeichnet, dass**

a. das Umlenkmittel (3) oder das weitere Umlenkmittel (19) als Spiegel oder als Facettenspiegel (29) ausgebildet ist oder dass

b. das Umlenkmittel (3) oder das weitere Umlenkmittel wenigstens einen Spiegel oder einen Facettenspiegel (29) aufweist, oder dass

c. das Umlenkmittel oder das weitere Umlenkmittel einen Spiegel mit einer kegelstumpfförmigen Spiegelfläche aufweist.

**33.** Vorrichtung nach einem der Ansprüche 20 bis 32, **dadurch gekennzeichnet, dass**

a. das Umlenkmittel (3, 18) und/oder das weitere Umlenkmittel (19) beweglich, insbesondere drehbar, an dem Detektionsobjektiv (2) befestigt sind, und/oder dass

b. das Umlenkmittel (3) oder wenigstens eines von mehreren Umlenkelementen (37, 38, 46) des Umlenkmittels (3) an dem Detektionsobjektiv (2) befestigt ist, und/oder dass

c. das Umlenkmittel (3) oder wenigstens eines von mehreren Umlenkelementen (37, 38, 46) des Umlenkmittels (3) beweglich an dem Detektionsobjektiv (2) befestigt ist.

**34.** Vorrichtung nach einem der Ansprüche 20 bis 33, **gekennzeichnet durch** eine hinsichtlich des Ablenkwinkels einstellbare Strahlablenkeinrichtung (32) zum Verändern des Auftreffortes (28) und/oder des Einfallswinkels und/oder der Einfallsrichtung des Beleuchtungslichtbündels (13) auf die Grenzfläche (10).

**Fig. 1**

**Fig. 2**

**Fig. 3**

**Fig. 4**

**Fig. 5**

*13*

*12*

*10*

*5*

**Fig. 6a**

*12*

*27*

*25*

*26*

**Fig. 6b**

Fig. 7a

Fig. 7b

Fig. 7c

Fig. 7d

**Fig. 8**

Fig. 9

**Fig. 10**

Fig. 11

**Fig. 12**

**Fig. 13**

**Fig. 14**

Fig. 15

Fig. 16

Fig. 17

**Fig. 18**

Fig. 19

Europäisches
Patentamt

European
Patent Office

Office européen
des brevets

**EUROPÄISCHER RECHERCHENBERICHT**

Nummer der Anmeldung

EP 15 17 7958

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2013/060644 A1 (LEICA MICROSYSTEMS [DE]; KNEBEL WERNER [DE]; SIECKMANN FRANK [DE]; WID) 2. Mai 2013 (2013-05-02) * Abbildungen 1-11 * * Seite 13 - Seite 16 * ----- | 1,3, 5-16,18, 19 | INV. G02B21/16 G01N21/64 G02B21/06 G02B27/56 |
| Y | DE 10 2006 039976 A1 (ZEISS CARL MICROIMAGING GMBH [DE]) 28. Februar 2008 (2008-02-28) * Abbildungen 1,2 * * Absatz [0001] - Absatz [0007] * * Absatz [0012] - Absatz [0032] * ----- | 1,3, 5-16,18, 19 | |
| X,P | WO 2014/202704 A1 (LEICA MICROSYSTEMS [DE]) 24. Dezember 2014 (2014-12-24)<br><br>* Abbildungen 1-7 * * Seite 12 - Seite 18 * ----- | 1,2,4, 20,21, 23,24, 26-34 | |
| X,P | WO 2014/147207 A1 (LEICA MICROSYSTEMS [DE]) 25. September 2014 (2014-09-25)<br><br>* Abbildungen 1-7 * * Seite 14 - Seite 18 * ----- | 1,2,4, 20,21, 24,26-34 | RECHERCHIERTE SACHGEBIETE (IPC)<br><br>G02B G01N |
| A | US 2 844 992 A (EUGEN BERNHARDT) 29. Juli 1958 (1958-07-29) * Abbildung 1 * * Spalte 2 * ----- | 1,20 | |
| A | US 4 626 079 A (NAKAMURA EIJI [JP] ET AL) 2. Dezember 1986 (1986-12-02) * Abbildungen 3-15 * * Spalte 3 * ----- -/-- | 1,20 | |

Der vorliegende Recherchenbericht wurde für alle Patentansprüche erstellt

| Recherchenort | Abschlußdatum der Recherche | Prüfer |
|---|---|---|
| München | 29. September 2015 | Beutter, Matthias |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
............................................................................................
& : Mitglied der gleichen Patentfamilie, übereinstimmendes
    Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 15 17 7958

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2005/031429 A1 (LEICA MICROSYSTEMS [DE]; ULRICH HEINRICH [DE]; KNEBEL WERNER [DE]; MOE) 7. April 2005 (2005-04-07) * Abbildungen 2-5 * * Seite 8 - Seite 9 * ----- | 1,20 | |
| A | DE 10 2012 214568 A1 (LEICA MICROSYSTEMS [DE]) 20. Februar 2014 (2014-02-20) * das ganze Dokument * ----- | 1,20 | |
| A | JP H05 164970 A (JAPAN RES DEV CORP; ICHIMURA TSUTOMU) 29. Juni 1993 (1993-06-29) * Zusammenfassung * ----- | 1,20 | |
| A | AXELROD D: "Total internal reflection fluorescence microscopy in cell biology", TRAFFIC, MUNKSGAARD, DK, Bd. 2, Nr. 2, 1. Januar 2001 (2001-01-01), Seiten 764-774, XP002262983, ISSN: 1398-9219, DOI: 10.1034/J.1600-0854.2001.21104.X * das ganze Dokument * ----- | 1,20 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 29. September 2015 | Beutter, Matthias |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

# EP 2 977 810 A1

## ANHANG ZUM EUROPÄISCHEN RECHERCHENBERICHT
## ÜBER DIE EUROPÄISCHE PATENTANMELDUNG NR.

EP 15 17 7958

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-09-2015

| Im Recherchenbericht angeführtes Patentdokument | Datum der Veröffentlichung | Mitglied(er) der Patentfamilie | Datum der Veröffentlichung |
|---|---|---|---|
| WO 2013060644 A1 | 02-05-2013 | CN 103091825 A | 08-05-2013 |
| | | CN 104054014 A | 17-09-2014 |
| | | DE 102011054914 A1 | 02-05-2013 |
| | | EP 2587295 A1 | 01-05-2013 |
| | | GB 2509664 A | 09-07-2014 |
| | | JP 2013097380 A | 20-05-2013 |
| | | JP 2014531060 A | 20-11-2014 |
| | | US 2013107358 A1 | 02-05-2013 |
| | | US 2014300958 A1 | 09-10-2014 |
| | | WO 2013060644 A1 | 02-05-2013 |
| DE 102006039976 A1 | 28-02-2008 | DE 102006039976 A1 | 28-02-2008 |
| | | US 2008049313 A1 | 28-02-2008 |
| WO 2014202704 A1 | 24-12-2014 | DE 102013211426 A1 | 18-12-2014 |
| | | WO 2014202704 A1 | 24-12-2014 |
| WO 2014147207 A1 | 25-09-2014 | DE 102013213781 A1 | 25-09-2014 |
| | | WO 2014147207 A1 | 25-09-2014 |
| US 2844992 A | 29-07-1958 | KEINE | |
| US 4626079 A | 02-12-1986 | KEINE | |
| WO 2005031429 A1 | 07-04-2005 | AT 422246 T | 15-02-2009 |
| | | EP 1697781 A1 | 06-09-2006 |
| | | US 2006250689 A1 | 09-11-2006 |
| | | WO 2005031429 A1 | 07-04-2005 |
| DE 102012214568 A1 | 20-02-2014 | CN 104541194 A | 22-04-2015 |
| | | DE 102012214568 A1 | 20-02-2014 |
| | | EP 2885669 A1 | 24-06-2015 |
| | | US 2015205087 A1 | 23-07-2015 |
| | | WO 2014026683 A1 | 20-02-2014 |
| JP H05164970 A | 29-06-1993 | JP 3217097 B2 | 09-10-2001 |
| | | JP H05164970 A | 29-06-1993 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10344410 A1
- DE 102006039976 A1
- DE 102005040833 A1
- DE 19923563 C2

**In der Beschreibung aufgeführte Nicht-Patentliteratur**

- **AXELROD, D.** *Total Internal Reflection Fluorescence Microscopy in Cell Biology,* 2001, 764-774
- **HOFF, M. ; DE SARS, V. ; OHEIM, M.** A programmable light engine for quantitative single molecule TIRF and HILO imaging. *Opt. Express,* 2008, vol. 16, 18495-18504
- Total internal reflection fluorescence microscopy (TIRFM) of acridine orange in single cells. **SAILER, R. ; STOCK, K. ; STRAUSS, W. S. L. ; LYTTEK, M. ; SCHNECKENBURGER, H.** Endocytobiosis & Cell Research. 2001, vol. 14, 129-136